(19) Europäisches Patentamt

European Patent Office

Office européen des brevets

(11) **EP 0 930 586 B1**

(12) **EUROPÄISCHE PATENTSCHRIFT**

(45) Veröffentlichungstag und Bekanntmachung des
Hinweises auf die Patenterteilung:
**07.06.2006 Patentblatt 2006/23**

(51) Int Cl.:
*G07B 17/00* (2006.01)

(21) Anmeldenummer: **98250405.2**

(22) Anmeldetag: **23.11.1998**

(54) **Anordnung und Verfahren zum Datenaustausch zwischen einer Frankiermaschine und Chipkarten**

Apparatus and method for transferring information between a franking machine and IC-cards

Dispositif et méthode pour l'échange de données entre une machine d'affranchissement et des cartes à puce

(84) Benannte Vertragsstaaten:
**CH DE FR GB IT LI**

(30) Priorität: **15.12.1997 DE 19757649**

(43) Veröffentlichungstag der Anmeldung:
**21.07.1999 Patentblatt 1999/29**

(73) Patentinhaber: **Francotyp-Postalia GmbH
16547 Birkenwerder (DE)**

(72) Erfinder:
• **Günther, Stephan
  13465 Berlin (DE)**
• **Kubatzki, Ralf
  10405 Berlin (DE)**

(56) Entgegenhaltungen:
**EP-A- 0 762 338          EP-A- 0 789 333
US-A- 4 802 218          US-A- 5 490 077**

## Beschreibung

Die Erfindung betrifft eine Anordnung und ein Verfahren zum Datenaustausch zwischen einer Frankiermaschine und Chipkarten gemäß der in den Ansprüchen 1 und 9 angegebenen Art. Die Frankiermaschine ist mit einer Chipkarten-Schreib/Leseeinheit und zugehörigen Steuerung ausgestattet, welche einerseits für gültige Chipkarten eine bestimmten Reihenfolge für deren Einstecken in die Chipkarten-Schreibl Leseeinheit verlangt, um Daten nachzuladen und welche andererseits dem autorisierten Benutzer gestattet, für das Einstecken weiterer Chipkarten niedrigen Ranges eine bestimmten Reihenfolge festzulegen, um die Funktions- und Dateneingabe in die Frankiermaschine zu vereinfachen.

Moderne Frankiermaschinen, wie beispielsweise die aus US 4.746.234 bekannte Thermotransfer-Frankiermaschine, setzen vollelektronische digitale Druckvorrichtungen ein. Damit ist es prinzipiell möglich, beliebige Texte und Sonderzeichen im Frankierstempeldruckbereich und ein beliebiges oder ein einer Kostenstelle zugeordnetes Werbeklischee zu drucken. Beispielsweise die Frankiermaschine T1000 der Anmelderin hat einen Mikroprozessor, welcher von einem gesicherten Gehäuse umgeben ist, welches eine Öffnung für die Zuführung eines Briefes aufweist. Bei einer Briefzuführung übermittelt ein mechanischer Briefsensor (Mikroschalter) ein Druckanforderungssignal an den Mikroprozessor. Der Frankierabdruck beinhaltet eine zuvor eingegebene und gespeicherte postalische Information zur Beförderung des Briefes. Es ist auch möglich einen internen Kostenstellenausdruck mit derselben Druckvorrichtung zu erzeugen. Jedem Benutzer steht der gesamte Funktionsumfang der T1000 zur Verfügung. Die Verwaltung von abrechnungsspezifischen Daten über Kostenstellen ist für Frankiermaschinen schon des längeren bekannt. Zweck der Kostenstellen ist es, Transparenz in die Abrechnung von Geräten zu bringen, die von unterschiedlichen Benutzern gebraucht werden. Unter dem Begriff Kostenstelle ist ein für die abteilungsweise Abrechnung bzw. Buchung von Benutzungshandlungen vorgesehener nichtflüchtiger Speicherbereich in der Frankiermaschine zu verstehen. Jeder Kostenstelle ist eine Nummer und/oder Bezeichnung zugeordnet, über welche der vorgenannte Speicherbereich angewählt wird.

Es ist weiterhin bekannt, auch kostenstellenspezifische Daten auf Chipkarten zu hinterlegen, um so die benutzerspezifischen Informationen mobil vorzuhalten und einen bewußten Mißbrauch anderer Kostenstellen zu vermeiden. In US 5,490,077 wurde bereits für die oben genannte Thermotransfer-Frankiermaschine eine Dateneingabemöglichkeit mittels Chipkarten vorgeschlagen. Eine der Chipkarten lädt neue Daten in die Frankiermaschine und ein Satz an weiteren Chipkarten gestattet durch das Stecken einer Chipkarte eine Einstellung, insbesondere einer Kostenstelle, entsprechend eingespeicherter Daten vorzunehmen. Das Datenladen und die Einstellung der Frankiermaschine sollen damit bequemer und schneller als per Tastatureingabe möglich sein. Die Tastatur der Frankiermaschine bleibt klein und übersichtlich, weil keine zusätzlichen Tasten erforderlich sind, um zusätzliche Funktionen zu laden oder einzustellen. Auf der Rückseite der Frankiermaschine befindet sich ein Einsteckschlitz einer Chipkarten-Schreib/Leseeinheit, in welchen die jeweilige Chipkarte vom Kunden innerhalb eines Zeitfensters eingesteckt werden soll. Wegen des mangelnden unmittelbaren Sichtkontaktes gelingt es einem ungeübten Benutzer nicht immer sofort, hintereinander die erforderlichen Chipkarten einzustecken, was dann zu unerwünschten Verzögerungen führt. Die Frankiermaschine arbeitet mit Chipkarten, welche selbst mit einem Mikroprozessor ausgestattet sind und somit in der Lage sind zu prüfen, ob die Frankiermaschine ein gültiges Datenwort zur Chipkarte übermittelt, bevor eine Antwort an die Frankiermaschine gesendet wird. Erfolgt aber keine Antwort bzw. Benutzeridentifikation, wird dies als Fehler in der Frankiermaschine registriert und angezeigt, bevor eine Aufforderung in der Anzeige angezeigt wird, die Chipkarte zu entfernen. Ein einziger Slot ist für eine Vielzahl an Chipkarten vorgesehen, welche sequentiell eingesteckt werden. Eine Tabelle von Paßwörtem ist in der Frankiermaschine gespeichert, um automatisch Paßwörter in die Chipkarte einzugeben. Die Chipkarte prüft, ob die Frankiermaschine zum Benutzerkreis gehört, indem sie die Paßwörter mit einem intern gespeicherten Paßwort vergleicht. Mit temporär gültigen Paßwörtern, die dem Benutzer auf Wunsch mitgeteilt werden, wenn die Bezahlung gesichert ist, können Zusatz-, Sonderfunktionen und Informationen aus der Chipkarte genutzt werden. Nach Abarbeitung der Kommandosequenz gemäß Übertragungsprotokoll, die weitere Kommandos zum Umschalten in einen Sicherheitsmodus der Chipkarte und zur manuellen Paßworteingabe in die Chipkarte umfaßt, sind die geschützten Chipkartendaten abrufbar. Nachteilig ist hierbei, daß der Benutzer beim Einstecken mehrerer Chipkarten auf die richtige Reihenfolge achten muß. Die Tarif-Nachlade-Chipkarte muß zuerst gesteckt werden. Auch bei den Folgekarten obliegt die Auswahl der zu steckenden Chipkarte allein dem Benutzer. Bekanntlich wird zur Sicherung der Authentizität in unterschiedlichen Sicherheitsleveln eine PIN- oder Paßwort-Eingabe verlangt. Nachteilig ist jedoch, daß eine derartige Vielzahl an Paßwörtern, die unter Umständen nur zeitlich befristet gültig sind, manuelle PIN- oder Paßwort-Eingabe für eine Vielzahl von Karten zu unerwünschten Verwechslungen führen könnte.

In der DE 196 05 015 C1 ist bereits eine Ausführung für eine Druckvorrichtung (JetMail® ) vorgeschlagen worden, die bei einem nichtwaagerechten annähernd vertikalen Brieftransport einen Frankierdruck mittels einem hinter einer Führungsplatte in einer Ausnehmung stationär angeordneten Tintenstrahldruckkopf durchführt. Ein Drucksensor ist zur Briefanfangserkennung kurz vor der Ausnehmung für den Tintenstrahldruckkopf angeordnet und wirkt mit einem Inkrementalgeber zusammen. Durch die auf dem Transportband angeordneten Andruckelemente ist der Brieftransport schlupffrei und das während des Transportes abgeleitete Inkrementalgebersignal beeinflußt die Druckbildqualität positiv. Bei einer solchen, höhere Abmaße aufweisenden Frankiermaschine kommt es in besonderem Maße darauf an, daß eine Chipkarten-Schreib/Leseeinheit so angeordnet und betrieben wird, daß mit sequentiell einsteckbaren Chipkarten problemlos gearbeitet werden kann. Weil der Speicherplatz auf einer Chipkarte begrenzt ist, muß ggf. eine Vielzahl an Chipkarten vom Benutzer bereitgehalten werden und die Frankiermaschine muß dazu eingerichtet sein, alle geladenen Daten zu speichern.

Als alternativer Weg zur Lösung des vorgenannten Problems, wonach der auf einer Chipkarte verfügbare Speicherplatz nur begrenzt vorhandenen ist, wird in der US 4 802 218 vorgeschlagen, mehrere Chipkarten gleichzeitig zu verwenden, die in eine Vielzahl an Schreib-Leseeinheiten eingesteckt sind. Neben einer USER-Chipkarte für die Guthabennachladung und Abrechnung, wobei der zu druckende Portogebührenwert vom Guthaben subtrahiert wird, sind auch eine Masterkarte und eine weitere Rate-Chipkarte mit einer gespeicherten Portogebührentabelle gleichzeitig eingesteckt. Durch den Zugriff auf eine Portogebührentabelle, kann entsprechend dem eingegebenen Gewicht und Versandziel ein Portogebührenwert ermittelt werden, ohne eine ganze Tabelle in die Maschine zu laden. Da aber zu jeder Chipkarte je eine Schreib-Leseeinheit erforderlich ist, wird das Gerät zu groß und teuer. Außerdem ist ein separates Wiederauflade-Terminal erforderlich, um das Guthaben in der USER-Chipkarte wieder aufzufüllen, wobei zu dieser Wiederauflade-Funktion eine Masterkarte berechtigt. Eine Super-Visor-Karte hat Zugriff auf alle Masterkarten. Verschiedene Sicherheitslevel werden durch zugehörige Schlüsselcodes erschlossen. Ein solches System mit mehreren Slots für Chipkarten ist insgesamt sehr aufwendig.

Aus der DE 195 16 429 ist ein Verfahren für eine Zugangsautorisierung zu einer gesicherten Einrichtung mittels kartenförmiger Masterelemente bekannt, welche kartenförmige Autorisierungselemente als gültig erkennbar machen. Derartig gültig gemachte kartenförmige Autorisierungselemente erlauben später den Zugang zu der gesicherten Einrichtung, ohne daß der Benutzer im Besitz des Masterelementes ist. Auch können weitere Autorisierungselemente als gültig bestätigt werden. Der Bestätigungsvorgang schließt einen Informationsaustausch zwischen einem Masterelement höheren Ranges und einem Autorisierungselement bzw. Masterelement niedrigeren Ranges und einem elektronischem Schloß, der gesicherten Einrichtung, ein. Spezielle Kundenwünsche können dabei jedoch nicht berücksichtigt werden, denn alle so erzeugten Karten sind technisch und funktionell gleich und dienen lediglich der Verteilung von Zugangsberechtigungen einer hierarchisch gegliederten Verwaltung von gesicherten Einrichtungen. Die Verwendung einer Chipkarte zur Zugangsberechtigung auch in unterschiedlichen Hierarchieebenen ist zwar bekannt, jedoch obliegt eine weitere Dateneingabe per Tastatur dem Benutzer, um eine Anwendung aufzurufen bzw. einzustellen.

Die Chipkarten werden üblicherweise vom Chipkartenhersteller und Frankiermaschinenhersteller initialisiert. Es ist jedoch für den Frankiermaschinenhersteller aufwendig, dabei die speziellen Kundenwünsche zu berücksichtigen. Für den Benutzer der Frankiermaschine besteht die Notwendigkeit seine Kundenwünsche dem Hersteller mitzuteilen, welche eine spezielle Eingabefunktion per Chipkarte betreffen. Bis der Benutzer eine entsprechend initialisierte Chipkarte zugesandt bekommt, kann die Frankiermaschine weiterhin nur per Frankiermaschinentastatur für die spezielle Eingabefunktion eingestellt werden.

Der Erfindung liegt die Aufgabe zugrunde, eine Anordnung und ein Verfahren zum Datenaustausch zwischen einer Frankiermaschine und Chipkarten zu schaffen, wobei die Reihenfolge sequentiell einzusteckender Chipkarten zum einen Teil durch den Hersteller definiert und zum anderen Teil durch den Benutzer definiert wird. Beim Zugriff auf geschützte Speicherbereiche der Chipkarte soll eine angepaßte Sicherheit bei größtmöglicher Anwenderfreundlichkeit unter geringen Kosten erreicht werden. Der Schutz der übertragenen Daten vor einer Manipulation soll gewährleistet werden.

Die Aufgabe wird mit den Merkmalen des Anspruchs 1 durch ein Verfahren bzw. mit den Merkmalen des Anspruchs 9 durch eine Anordnung zum Datenaustausch gelöst.

Es wird eine erste Prozessor-Chipkarte eingesetzt, welche zugleich eine allgemeine Zugangsberechtigung zur Frankiermaschine darstellt und eine Nachlademöglichkeit in die Frankiermaschine bietet. Die erste Prozessor-Chipkarte enthält eine Folgenummer gesichert gespeichert, welche eine Beziehung zu einer Folgenummer einer weiteren Chipkarte hat.

Die weiteren Chipkarten können entweder eine in die Frankiermaschine gespeicherte Information ergänzen bzw. in geeigneter Weise ändern und/oder bieten einen eingeschränkten Zugang zu den Funktionen der Frankiermaschine.

Die Frankiermaschine ist mit einer Chipkarten-Schreib/Leseeinheit und zugehörigen Steuerung ausgestattet, welche einerseits für gültige Chipkarten eine bestimmten Reihenfolge für deren Einstecken in die Chipkarten-Schreib/Leseeinheit verlangt, um Daten nachzuladen und welche andererseits dem autorisierten Benutzer gestattet, für das Einstecken weiterer geeignet initialisierter Chipkarten niedrigen Ranges eine bestimmten Reihenfolge festzulegen, um die Funktions- und Dateneingabe in die Frankiermaschine zu vereinfachen. Letztere Chipkarten stellen die Frankiermaschine auf einen Betrieb mit eingeschränkten Funktionsumfang ein. Zu deren Initialisierung wird unter Verwendung der Tastatur und Anzeige und mit Hilfe eines Mikroprozessors und der zugehörigen nichtflüchtigen Speicher in Speicherbereichen innerhalb der Frankiermaschine eine Tabelle mit einer speziellen hierarchischen Struktur erstellbar, indem die vorgespeicherte Struktur entsprechend vom Benutzer modifiziert wird. Unter Initialisierung wird nachfolgend das Vervollständigen einer Chipkartennummer, das Einschreiben in einen Teil eines Kennungsstrings in einem Speicher der Chipkarte, das Zuordnen und Speichern der Zuordnung der Chipkartennummer zu einer Viehlzahl von Anwendungsfunktionen oder zu mindestens einer Anwendungsfunktion in einem nichtflüchtigen Speicher der Frankiermaschine verstanden. Unter einer top-down-Initialisierung wird nachfolgend das Ableiten von Chipkartennummern und deren Zuordnung in der Frankiermaschine zu einer eingeschränkten Anzahl von Anwendungsfunktionen oder zu mindestens einer Anwendungsfunktion verstanden.

Dabei entsteht eine Baumstruktur in der Hierarchie für die von der erfindungsgemäßen ersten Chipkarte abgeleite-ten zweiten Chipkarten und weiteren Folgekarten, insbesondere speziellen Funktionenanwendungskarten, welche mit ihrer Chipkarten-intern gespeicherten Chipkartennummer den Zugriff auf die Tabelle gestatten. In vorgenannten Speicherbereichen ist die Zuordnung einer Chipkartennummer zu Funktionenanwendungen mit Limit-Daten beliebig wählbar vom autorisierten Benutzer speicherbar.

Die Anordnung zum Datenaustausch zwischen der Frankiermaschine und Chipkarten ermöglicht es, auf kostengünstige und kundenfreundliche Art unterschiedlichste Daten in die Frankiermaschine zu laden bzw. auszuwählen. Besteht also das Erfordernis, in der Frankiermaschine gespeicherte Daten in Abhängigkeit von nicht vorhersehbaren äußeren Ereignissen zu ändern, d.h. ein Datenupdate durchzuführen, dann werden von der Steuereinrichtung der Frankiermaschine die Daten aus ungesicherten und dann aus gesicherten Speicherbereichen der Chipkarte bei Gültigkeit geladen und mit bereits zuvor geladenen Daten anderer Chipkarten in geeigneter Weise verknüpft.

Die Chipkarten-Schreib/Leseeinheit arbeitet nach einem für den jeweiligen Kartentyp vorgesehenen unterschiedlichen Kommunikationsprotokoll und lädt Daten aus eingesteckten gültigen Chipkarten unter Steuerung durch die Steuereinrichtung der Frankiermaschine. Die Steuereinrichtung ist mit einem Programmspeicher und einem Mikroprozessor ausgerüstet, um entsprechend einem Anwendungsprogramm die entsprechenden nichtflüchtigen Speicherbereiche, die von der Chipkarten-Schreib/Leseeinheit aktuell empfangenen Daten zu speichern und mit den Speicherbereichen in geeigneter Weise zu verbinden, welche bereits vorher geladene Daten aus vorher eingesteckten gültigen Chipkarten enthalten.

Die Chipkarten-Leseeinheit der Frankiermaschine besteht aus einer Kontaktierungseinheit zur mechanischen Aufnahme und elektrischen Verbindung der Chipkarte sowie aus einer dazugehörigen Mikroprozessorkarte, die als Bindeglied zwischen der Frankiermaschine und der Chipkarte fungiert, um die Kommunikation bzw. den Datentransfer zu ermöglichen. Das Interface der Chipkarten-Leseeinheit ist eine serielle Schnittstelle nach dem RS232 Standard, das Software-Protokoll kann herstellerspezifisch variieren. Die Chipkarten-Leseeinheit wird in das Base-Gehäuse der Frankiermaschine integriert.

Es wird somit eine Nachlademöglichkeit für mindestens die Daten eines Funktionsmerkmals und/oder der Portotabellendaten geschaffen, indem der Dialog mit der Chipkarte über eine einzige Chipkarten-Schreib/Lese-Einheit geführt wird, wobei ein Laden von Daten bezüglich neuer Merkmale und/oder bezüglich einer Portogebührentabelle aus einer ersten Chipkarte erfolgt, gekoppelt mit einem ersten Code, der eine Zuordnung von in der Frankiermaschine gespeicherten Merkmalen/Daten zu einem zweiten Code ändert, der eingegeben wird.

Außerdem ist eine Zugriffsmöglichkeit auf mindestens eine definierte Kostenstelle oder auf Daten eines Funktionsmerkmals mittels einer Chipkarte automatisch eingebbar. Dabei wird eine automatische Zugangsberechtigung mindestens zur Gesamt-Kostenstelle geprüft. Wenn nicht anders vereinbart, werden alle ausgegebenen Chipkarten nur auf diese Kostenstelle zugreifen, wobei anschließend eine manuelle Wahlmöglichkeit einer speziellen abteilungsbezogenen Kostenstelle für den Kostenstellenspeicher der Frankiermaschine über Tastatur besteht. Es kann jedoch auch vereinbart werden, daß eine zweite oder weitere Folgechipkarten beliebigen Typs auf definierte Kostenstellen zugreifen. Das wird bei eingesteckter Masterchipkarte dadurch erreicht, indem in Speicherbereichen innerhalb der Frankiermaschine eine Tabelle mit einer speziellen hierarchischen Struktur erstellt wird.

Die Erfindung basiert auf dem Gedanken, in unterschiedlichen Sicherheitsleveln unterschiedliche Sicherungsmaßnahmen zuzulassen, um eine angepaßte Sicherheit zu erreichen. Der autorisierte Zugang zu den Chipkartendaten kann innerhalb der Chipkarte selbst geprüft werden. Die Frankiermaschine übermittelt ihre Seriennummer zur Chipkarte, die einen Vergleich der übermittelten Seriennummer mit einer gespeicherten Seriennummer durchführt und das Vergleichsergebnis zur Chipkarten-Schreib/Leseeinheit übermittelt. Bei positiven Vergleichsergebnis empfängt letztere einen Datensatz mit Nummern, Vorgabedaten und Nachladedaten sowie einen zugehörigen Autorisierungscode MAC. Die Steuerung der Frankiermaschine prüft die Autorisierung der geladenen Daten anhand des übermittelten Autorisierungscodes MAC. Für das Nachladen von Daten wird eine herstellerdefinierte Reihenfolge für das Einstecken der Nachladechipkarten durch eine neben der Basisnummer übermittelte Folgenummer gesichert.

Darüber hinaus ist die Steuerung mit einem Programm ausgestattet, so daß vom Anwender, insbesondere vom Frankiermaschinenbenutzer, eine nach hierarchischem Prinzip individuell angepaßte Sicherheit in die Frankiermaschine hinein programmiert werden kann.

Erfindungsgemäß wird mit Hilfe einer fortlaufenden Chipkarten-Nummer in jeder Chipkarte, die zusammen mit der Frankiermaschine in Verwendung kommt, das gesamte Kostenstellen-Handling innerhalb der Frankiermaschine gesteuert. Innerhalb des Programmspeichers der Frankiermaschine ist eine erste Anwendung gespeichert, die bestimmten Chipkartennummern bestimmte Privilegien (Hierarchien), Sicherheitsmaßnahmen und Kostenstellennummern zuordnet.

Eine zusammen mit der Frankiermaschine ausgelieferte erste Chipkarte wird als Master-Karte bezeichnet. Bei letzterer ist die Befugnis nicht eingeschränkt. Die Master-Karte enthält aber neben der fortlaufenden Nummer auch weitere Daten in ihren gesicherten nichtflüchtigen Speicherbereichen. Das Verfahren zum Datenaustausch sieht erfindungsgemäß vor, vorgenannte weitere Daten in separaten Datensätzen zu übermitteln. Diese vorgenannten weiteren Daten umfassen eine Folgenummer für die Weiterführung des Nachladens mittels einer weiteren Nachladechipkarte und insbesondere die Anwendungsbefugnis von Folgekarten limitierende Grenzdaten oder Limit-Daten, welche die Limitierung einer Operation bewirken, wenn diese nicht von der Masterkarte eingestellt und ausgelöst wird. Letztere Limit-Daten bzw. Grenzdaten liefern eine applikationsangepaßte Sicherheit für eine zweite Chipkarte oder für die weiteren Folgekarten. Die hierarchisch am höchsten stehende erste Chipkarte hinterlegt ein Limit-Konto in einem geschützten Speicherbereich eines nichtflüchtigen Speichers der Frankiermaschine für die rangniedrigere zweite Chipkarte. Dieses Prinzip wird in der Hierarchie abwärts für Folgekarten fortgesetzt. So hinterlegt die hierarchisch höherstehende zweite Chipkarte ein Limit-Konto in einem geschützten Speicherbereich eines nichtflüchtigen Speichers der Frankiermaschine für eine rangniedrigere Folgekarte. Entsprechend der modifizierten Struktur wird die vorgenannte Tabelle mindestens teilweise angezeigt, bevor eine Abspeicherung erfolgt. Ein von der Master-Karte vorgegebenes Limit-Konto kann nur in einer Richtung verändert, also nur stärker limitiert werden. Das von einer Chipkarte mit höherem Rang vorgegeben Limit kann damit nicht einer Chipkarte mit niederem Rang aufgehoben werden.

Dem Benutzer wird ein Satz an Chipkarten zur Verfügung gestellt, die den Zugriff auf vorwählbare Frankiermaschinenfunktionen für deren kombinierte Anwendung steuern. Außerdem wird eine gut zugängliche Chipkarten-Schreib/Leseeinheit, die hinter der Führungsplatte angeordnet ist und eine zugehörige Steuerung in der Frankiermaschine geschaffen, die Probleme beim Einstecken bzw. Irrtümer in der Auswahl einer Chipkarte vermeidet. Das Chipkarten/Frankiermaschinen-System ist beliebig erweiterbar bzw. vom Benutzer modifizierbar. Eine andere eingesteckte Chipkartenart kann von der Frankiermaschine erkannt und entsprechend ausgewertet werden. Die Frankiermaschine kann damit auch mit einer preiswerteren Chipkartenart betrieben werden. Die Vorteile der eindeutigen, einfachen und fälschungssicheren Kostenstellenauswahl über eine Folgechipkarte kann unter Vermeidung der Benutzung von nennenswertem Speicherplatz auf derselben angewendet werden. Neben der Kostenstellenfreigabe kann eine Freigabe vorbestimmter weiterer Funktionen lediglich durch Eingabe einer Chipkartennummer, d.h. durch Einstecken einer diesbezüglich initialisierten Folgechipkarte in eine Chipkarten-Schreib/Leseeinheit, erreicht werden. Zu dieser Chipkartennummer sind in der Tabelle zugeordnete Funktionen und/oder Daten gespeichert. Die Tabelle ist in entsprechenden Speicherbereichen des nichtflüchtigen Speichers der Frankiermaschine gespeichert. Die vorgenannte Tabelle hat eine spezielle hierarchische und modifizierbare Struktur, in welcher Limit-Daten zugeordnet gespeichert sind. Die vorgenannte modifizierbare Struktur ist in ein Verzeichnis von gültigen Kartennummern, Verknüpfungsbedingungen und zugehörigen Parametersätzen aufgeteilt. Jede zweite und folgende Chipkarte muß nur eine Chipkartennummer enthalten. Die Frankiermaschine reserviert einen Speicherplatz für einen Parameterwert für mindestens eine Grenzwertart. Das erlaubt die kostengünstige Bereitstellung eines Satzes von herstellerseitig lediglich teilweise vorinitialisierten Chipkarten. Von einem autorisierten Benutzer kann in einem dritten Teil eines Kennungsstringes nun in den Speicherbereichen der Chipkarte mittels der Chipkarten-Schreib/Leseeinheit der Frankiermaschine die gewünschte Chipkartennummer ergänzend gespeichert bzw. modifiziert werden. Ein mit der Chipkarten-Schreib/Leseeinheit verbundenes Steuergerät der Frankiermaschine hat einen nichtflüchtigen Speicher mit Speicherbereichen für eine Zuordnung von gelisteten Anwendungsfunktionen zu Limit-Daten und zu einer Chipkarte. Der Mikroprozessor des Steuergerätes der Frankiermaschine ist programmiert, die in der jeweiligen Chipkarte gespeicherte Chipkartennummer zu laden, eine Zuordnung der gelisteten Anwendungsfunktionen zur jeweiligen Chipkartennummer in einem der Speicherbereiche des nichtflüchtigen Speichers der Frankiermaschine aufzurufen und die entsprechenden im Programmspeicher gespeicherten Anwendungsprogramme unter Einhaltung des Grenzwertes durchzuführen, wobei vom autorisierten Benutzer die Zuordnung beliebig wählbar und im Rahmen der Grenzwerte in den vorgenannten Speicherbereichen speicherbar ist.

Die aufgeteilte modifizierbare Struktur ist über sogenannte Pointer wieder herstellbar, um eine entsprechende Dateneingabe in den Hauptarbeitsspeicher vorzunehmen, wobei der Mikroprozessor der Frankiermaschine eine entsprechende Funktion bzw. eine gespeicherte Reihenfolge von Funktionen entsprechend dem Anwendungsprogramm ausführt. Eine der Funktionen kann ausgeführt werden, um die Struktur in einer Tabelle mindestens teilweise anzuzeigen oder um diese modifizieren zu können.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 a,    Anordnung der Speicherbereiche und weiteren Bestandteile der Schaltung im Chip einer Prozessor-Chipkarte,

Figur 1b,    Baumstruktur der Hierarchie für die von der Master-Chipkarte abgeleiteten Funktionenanwendungskarten,

Figur 2,     Blockschaltbild zur Einstellung der Funktion der Frankiermaschine und zur Ansteuerung der Druckeinrichtung,

Figur 3,     Perspektivische Ansicht der Frankiermaschine von hinten,

Figur 4a,    Ablaufplan für eine Steuerung durch den Mikroprozessor bei der Dateneingabe mittels einer Chipkarte,

Figur 4b,    Datenaustausch zwischen Chipkarte und Chipkarten-Schreib/ Leseeinheit,

Figur 5a,    Aufteilung der Struktur auf Speicherbereiche,

Figur 5b,    Ablaufplan für eine Steuerung durch den Mikroprozessor beim Aufruf mindestens einer der Funktionen entsprechend der gespeicherten Struktur durch Eingabe einer Chipkartennummer

Die Chipkarten unterteilen sich in Typen, wie reine Speicherkarten, intelligente Speicherkarten, Prozessor-Chipkarte und multifunktionale Chipkarte. Nur bei letzterer sind die Anwendungsmöglichkeiten maximal, was jedoch mit einem höherem Chippreis erkauft werden muß.

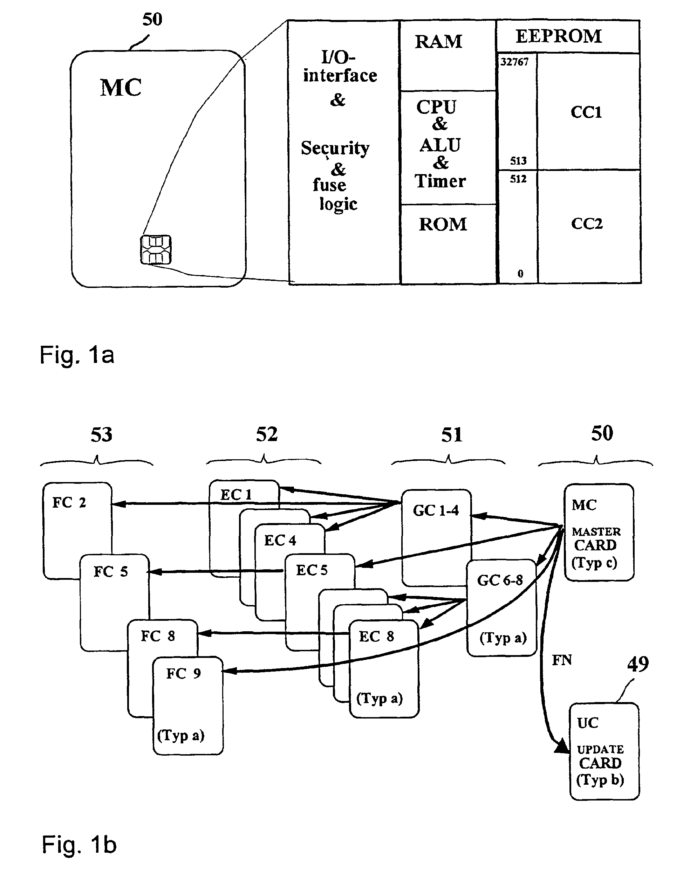

In der Figur 1a ist eine Anordnung der Speicherbereiche und weiteren Bestandteile der Schaltung im Chip einer Prozessor-Chipkarte dargestellt. Eine Prozessor-Chipkarte hat eine I/O-Interface-Schaltung, eine Sicherheits- und Schutzlogik (Security- und Fuselogik), und einen nichtflüchtigen Schreib/Lese-Speicher EEPROM auf dem gemeinsamen Chip sowie außerdem einen Nurlesespeicher ROM mit einem Programm und einen Prozessor CPU zur Abarbeitung des Programms und einen Hauptarbeitsspeicher RAM integriert. Die Prozessor-Chipkarte ermöglich eine Authentikation und erweitert damit die Anwendungsmöglichkeiten.

Unter dem Kontaktfeld des Chips befinden sich bekanntlich die Speicher, deren Speicherbereiche in ungeschützte und geschützte Bereiche aufgeteilt ist. In beiden Bereichen werden vom Frankiermaschinen- und Chipkartenhersteller erzeugte sonstige Daten gespeichert.
Zusammen mit dem nichtflüchtigen Schreib/Lese-Speicher EEPROM, mit dem ungeschützten CC1 und geschützten Speicherbereich CC2 ist auf dem gemeinsamen Chip der intelligenten Speicherkarte auch ein allgemeiner Speicherbereich im Nurlesespeicher ROM vorgesehen.

Mit dem Mikroprozessor wird eine PIN-Prüfung durchführt, bevor auf sicherheitsrelevante Daten im geschützten Speicherbereich CC2 zugegriffen wird. Eine Chipkartennummer im Kennungsstring ist teilweise im ROM und/oder im geschützten Speicherbereich CC2 sowie im ungeschützten Speicherbereich CC1 abgespeichert. Der Teil der Chipkartennummer im ungeschützten Speicherbereich CC1 kann mit Hilfe einer höheren Autorität verändert werden. Im geschützten Speicherbereich CC2 einer ersten Chipkarte sind zusammen mit dem einem Teil der Chipkartennummer sicherheitsrelevante Daten gespeichert, welche die Nachfolgekarte definieren, welche zeitliche, stückzahl- oder wertgrößenmäßige Grenzdaten darstellen oder Funktionen beinhalten, welche eine Limitierung einer Operation bewirken.

Die Autorisierung von Folgekarten mittels einer ersten Chipkarte (Masterkarte) kann somit beispielsweise zeitlich limitiert gültig sein, wenn entsprechende gespeicherte sicherheitsrelevante Daten in eine Frankiermaschine geladen und dort als Bedingung für eine autorisierte Folgekarte nichtflüchtig gespeichert werden.
Die Daten im geschützten Bereich sind auf verschiedene Weise erzeugt worden. Ein erster Teil des Kennungsstrings ist nur für den Chipkartenhersteller im Nurlesespeicher ROM beschreibbar. Ein zweiter Teil des Kennungsstrings ist nur für den Frankiermaschinenhersteller im geschützten nichtflüchtigen EEPROM-Bereich beschreibbar. Bei weiteren Chipkarten bzw. Folgechipkarten ist im ungeschütztem Datenbereich ein dritter Teil des Kennungsstrings vorgesehen, der vom Kunden modifiziert werden kann. Bei Masterkarten wird dieser Teil vom Frankiermaschinenhersteller beschrieben.
Bei weiteren Karten und Folgekarten ist für den Kunden der dritte Teil des Kennungsstrings auf folgende Weise veränderbar. Nach einer vorbestimmten, vorzugsweise menügesteuerten, Eingabe über die Frankiermaschinentastatur erlangt der Benutzer Zugriff auf diesen Bereich. Der vorgenannte Zugriff ist nur dem autorisierten Benutzer möglich. Letzterer verfügt zur vorausgehenden Autorisation beispielsweise über eine Prozessor-Chipkarte, welche in einer Hierarchie auf einer höheren Stufe steht, als die zu initialisierende Chipkarte.
Durch die Frankiermaschinen-interne Initialisierung mit Schaffung einer Zuordnung zu Anwendungsfunktionen in der Frankiermaschine und mit einem benutzerauthorisierten Einschreiben im dritten Teil des Kennungsstrings im Speicherchip der Chipkarte entsteht für eine Gruppe von Chipkarten eine hierarchische Struktur, die - wie in der Figur 1 b gezeigt wird - ausgehend von einer ersten Chipkarte vom Frankiermaschinenbenutzer beliebig erweiterbar und änderbar ist. Die erste Chipkarte 50 steht auf der obersten Hierarchiestufe und ist die personalisierte Master-Karte. Die in der Gruppe 51 bezeichneten zweiten Chipkarten stehen auf der ersten Hierarchiestufe, die in der Gruppe 52 bezeichneten weiteren Chipkarten stehen auf der zweiten Hierarchiestufe, die in der Gruppe 53 bezeichneten nachfolgenden Chipkarten stehen auf der dritten Hierarchiestufe, u.s.w., wobei solche Karten aus diesen Gruppen von Chipkarten auch als Folge-Karten bezeichnet werden, für welche stufenweise die Funktionenanwendungsberechtigung in wählbarer Weise limitiert und tabellarisch gespeichert ist. Die erste Karte 50 ist also die Master-Karte MC (Hierarchie 0), mit der sich alle Initialisierungen und Änderungen vornehmen lassen. Beispielsweise existieren im ersten Ast weitere 5 Karten mit den fortlaufenden Nummern 002 bis 006 für vier der Kostenstellen. Es wird die zweite Karte 51 für den Zugriff auf die Kostenstellen 1 bis 4 als Gruppen-Karte GC 1-4 autorisiert (Hierarchie 1). Die weiteren Folge-Karten 52 sind jeweils nur für eine einzige Kostenstelle als Einzelkarte EC 1, EC 3, EC 4 autorisiert (Hierarchie 2). Die zweite Karte 51 kann Änderungen in den Folge-Karten 52, d.h. in den Einzelkarten EC1, EC 3, EC 4 im Rahmen der eigenen Autorisierung gestatten. Die vorgenommene Änderung der Kostenstelle, nämlich KST-Nummer 1, 3 und 4 betrifft eine Änderung in der Zuordnung von Anwendungsfunktionen. Eine solche kann (top-down) mit Hilfe der Gruppenkarte (51) GC 1-4, jedoch nicht (bottom up) für die erste Karte 50 MC vorgenommen werden. Mit der Gruppenkarte (51) GC 1-4 kann auf eine der Kostenstellen, nämlich der Kostenstellen-Nummern 1 bis 4, der verfrankierte Portowert gebucht werden. Eine mittels der Gruppenkarte GC 1-4 Frankiermaschinen-intern initialisierte einzelne Funktionskarte FC 2 gestattet deren Besitzer nur eine informationelle Abfrage der Buchungen unter der Kostenstellen-Nummer 2 und nur Null-Wert-Frankierungen mit der Frankiermaschine vorzunehmen.

Weiterhin ist es in einem zweiten Ast vorgesehen, unter Auslassung der Erzeugung einer Gruppenkarte eine Einzelkarte EC 5 und eine Funktionskarte FC 5 zu erzeugen, welche beide der fünften Kostenstelle zugeordnet sind. Eine mittels der Einzelkarte EC 5 Frankiermaschinen-intern initialisierte einzelne Funktionskarte FC 5 gestattet deren Besitzer beispiesIweise nur eine informationelle Abfrage der Buchungen unter der Kostenstellen-Nummer 5 und Null-Wert-Frankierungen mit der Frankiermaschine vorzunehmen. Auch kann in einem Ast unter Auslassung weiterer Hierarchiestufen nur eine einer untersten Hierarchiestufe zugeordnete Folge-Karte FC 9 Frankiermaschinen-intern initialisiert werden. Die Karten der untersten Hierarchiestufe sind im Funktionenanwendungsumfang am weitesten beschränkt.

Ebenso kann in einem dritten Ast ohne Auslassung von Hierarchiestufen stufenweise eine Anzahl von zu jeder Hierarchiestufe zugeordneten Folge-Karten initialisiert werden, d.h. eine Gruppenkarte GC 6-8 als Folge-Karte 51 in der ersten Hierarchiestufe, eine Einzelkarte EC 8 als Folge-Karte 52 in der zweiten Hierarchiestufe und eine Funktionskarte FC 8 als Folge-Karte 53 in der dritten Hierarchiestufe. Die Folgekarten in der ersten bis dritten Gruppe 51, 52, 53 (Hierarchiestufe) können in vorteilhafter Weise von einem anderen preisgünstigeren Typ, als die Masterchipkarte sein. Die Folgekarten sind vorzugsweise vom Typ a und die Masterchipkarte ist vorzugsweise vom Typ c.

Im gesicherten nichtflüchtigen Speicherbereich der Prozessor-Chipkarte ist auch eine Folgenummer FN gespeichert, welche auf eine weitere Nachladechipkarte 49 verweist, mit welcher die Nachladung fortgesetzt bzw. modifiziert werden kann. Diese weitere Nachladechipkarte wird vom Hersteller mit Nachladedaten und mit einer weiteren Folgenummer beschrieben, welche eine nachfolgende weitere Nachladechipkarte verweist, die ggf. erst in der Zukunft vom Hersteller geliefert wird.

Während die Prozessor-Chipkarte 50 von einem Typ c ist, können die weiteren Nachladechipkarten 49 können vom gleichen Typ oder von einem anderem Typ, vorzugsweise vom Typ b sein.

Der Schutz der Karten vor Auslesen der fortlaufenden Nummer, der Folgenummer und weiterer gesicherter Daten ist in bekannter Weise durch PIN oder andere Sicherheitsalgorithmen möglich. Bei Verlust der Master-Karte ist nur über eine Information des Frankiermaschinenherstellers (und entsprechenden Nachweis der Authentizität) ein Ersatz möglich. Das Sperren bzw. die Freigabe aller anderen Karten ist durch die Master-Karte möglich. Eine weitere Sicherheit bei der Initialisierung des Systems mit Hilfe der Master-Karte ist dadurch möglich, daß nur physisch vorhandene Karten initialisierbar sind, dadurch werden die geheimen fortlaufenden Nummern der Karten geschützt. Bei einem Folgekarten-Verlust kann ein Sperren des entsprechenden Speicherbereiches in der Frankiermaschine erfolgen.

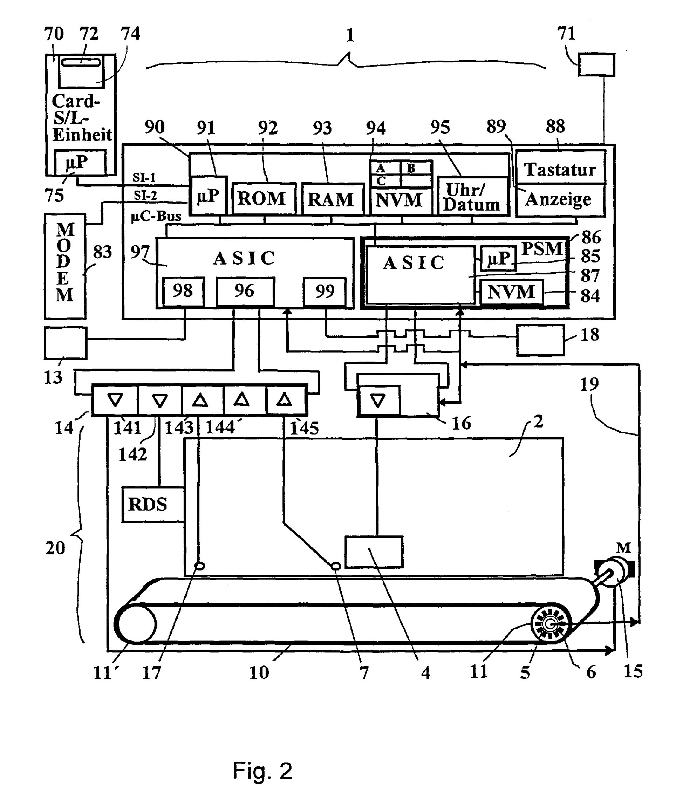

Die Figur 2 zeigt ein Blockschaltbild zur Einstellung der Funktion der Frankiermaschine und zur Ansteuerung der Druckeinrichtung 20 mit einer Chipkarten-Schreib/Lese-Einheit 70 und mit einer Steuereinrichtung 1 der Frankiermaschine. Die Steuereinrichtung 1 bildet das eigentliche Meter und umfaßt ein erstes Steuergerät 90, eine Tastatur 88 und eine Anzeigeeinheit 89 sowie einen ersten und zweiten anwendungsspezifischen Schaltkreis ASIC 87 und 97. Das erste Steuergerät 90 enthält einen ersten Mikroprozessor 91 und an sich bekannte Speichermittel 92, 93, 94 sowie einen Uhren/Datumsschaltkreis 95. Im nichtflüchtigen Speicher 94 sind Bereiche zur Speicherung der Abrechnungsdaten vorgesehen, die den Kostenstellen zugeordnet sind.

Der erste anwendungsspezifische Schaltkreis ASIC 87 bildet zusammen mit einem zweiten Mikroprozessor 85 und einem nichtflüchtigen Speicher 84 ein postalisches Sicherheitsmittel PSM 86. Das postalische Sicherheitsmittel PSM 86 wird von einem gesicherten Gehäuse umschlossen und weist eine schnelle serielle Schnittstelle zur Druckersteuerung 16 auf. Vor jedem Frankierabdruck erfolgt eine hardwaremäßige Abrechnung im ersten anwendungsspezifischen Schaltkreis ASIC 87. Die Abrechnung erfolgt unabhängig von Kostenstellen. Der zweiten Mikroprozessor 85 enthält einen - nicht gezeigten - integrierten Festwertspeicher int. ROM mit dem speziellen Anwendungsprogramm, was für die Frankiermaschine von der Postbehörde bzw. vom jeweiligen Postbeförderer zugelassen ist. Das postalische Sicherheitsmittel PSM 86 kann so ausgeführt sein, wie in der europäischen Anmeldung EP 789 333 A3 näher beschrieben wurde.

Beide vorgenannte ASIC's sind über den parallelen μC-Bus mindestens mit dem Steuergerät 90 und der Anzeigeeinheit 89 verbunden. Der erste Mikroprozessor 91 weist vorzugsweise Anschlüsse für die Tastatur 88, eine serielle Schnittstelle SI-1 für den Anschluß der Chipkarten-Schreib/Lese-Einheit 70 und eine serielle Schnittstelle SI-2 für den optionalen Anschluß eines MODEMs auf. Mittels des MODEMs kann das im nichtflüchtigen Speicher 84 des postalischen Sicherheitsmittels PSM 86 gespeicherte Guthaben erhöht werden.

Es ist vorgesehen, daß der zweite ASIC 97 eine serielle Schnittstellenschaltung 98 zu einem im Poststrom vorschalteten Gerät 13, eine serielle Schnittstellenschaltung 96 zur Druckeinrichtung 20 und eine serielle Schnittstellenschaltung 99 zu einem der Druckeinrichtung 20 im Poststrom nachgeschalteten Gerät 18 aufweist. Der nicht vorveröffentlichten deutschen Anmeldung 197 11 997.2 ist eine Ausführungsvariante für die Peripherieschnittstelle entnehmbar, welche für mehrere Peripheriegeräte (Stationen) geeignet ist. Sie trägt den Titel: Anordnung zur Kommunikation zwischen einer Basisstation und weiteren Stationen einer Postbearbeitungsmaschine und zu deren Notabschaltung.

Die Schnittstellenschaltung 96 gekoppelt mit der in der Maschinenbasis befindlichen Schnittstellenschaltung 14 stellt mindestens eine Verbindung zu den Sensoren 6, 7, 17 und zu den Aktoren, beispielsweise zum Antriebsmotor 15 für die Walze 11 und zu einer Reinigungs- und Dichtstation RDS für den Tintenstrahldruckkopf 4, sowie zum Tintenstrahldruckkopf 4 der Maschinenbasis her. Die prinzipielle Anordnung und das Zusammenspiel zwischen Tintenstrahldruckkopf und der RDS sind der nicht vorveröffentlichten deutschen Anmeldung 197 26 642.8 entnehmbar, mit dem Titel: Anordnung zur Positionierung eines Tintenstrahldruckkopfes und einer Reinigungs- und Dichtvorrichtung.

Einer der in der Führungsplatte 2 angeordneten Sensoren 7, 17 ist der Sensor 17 und dient zur Vorbereitung der Druckauslösung beim Brieftransport. Der Sensor 7 dient zur Briefanfangserkennung zwecks Druckauslösung beim Brieftransport. Die Transporteinrichtung besteht aus einem Transportband 10 und zwei Walzen 11,11'. Eine der Walzen ist die mit einem Motor 15 ausgestattete Antriebswalze 11, eine andere ist die mitlaufende Spannwalze 11'. Vorzugsweise ist die Antriebswalze 11 als Zahnwalze ausgeführt, entsprechend ist auch das Transportband 10 als Zahnriemen ausgeführt, was die eindeutige Kraftübertragung sichert. Ein Encoder 5, 6 ist mit einer der Walzen 11, 11' gekoppelt. Vorzugsweise sitzt die Antriebswalze 11 mit einem Inkrementalgeber 5 fest auf einer Achse. Der Inkrementalgeber 5 ist beispielsweise als Schlitzscheibe ausgeführt, die mit einer Lichtschranke 6 zusammen wirkt.

Es ist vorgesehen, daß die einzelnen Druckelemente des Druckkopfes innerhalb seines Gehäuses mit einer Druckkopfelektronik verbunden sind und daß der Druckkopf für einen rein elektronischen Druck ansteuerbar ist. Die Drucksteuerung erfolgt auf Basis der Wegsteuerung, wobei der gewählte Stempelversatz berücksichtigt wird, welcher per Tastatur 88 direkt oder bei Bedarf indirekt per Chipkarte eingegeben und im Speicher NVM 94 nichtflüchtig gespeichert wird. Ein geplanter Abdruck ergibt sich somit aus Stempelversatz (ohne Drucken), dem Frankierdruckbild und gegebenenfalls weiteren Druckbildem für Werbeklischee, Versandinformationen (Wahldrucke) und zusätzlichen editierbaren Mitteilungen.

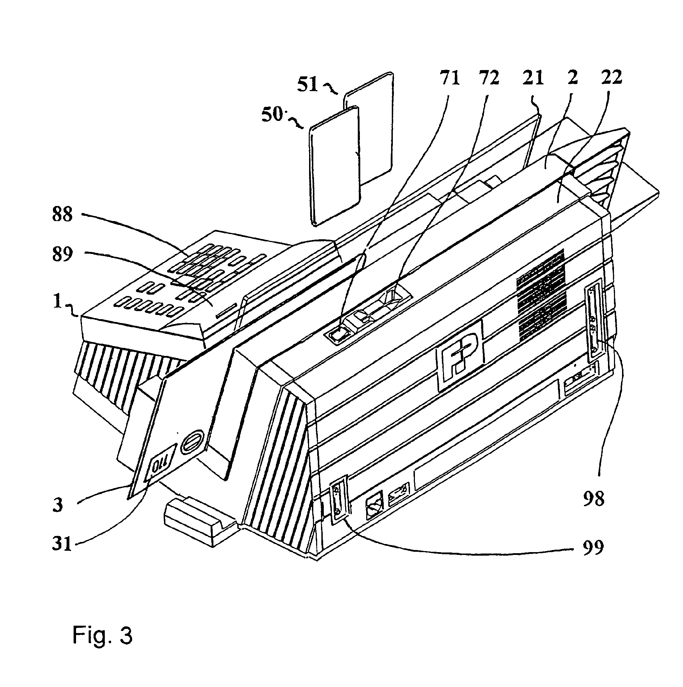

In der Figur 3 ist eine perspektivische Ansicht der Frankiermaschine von hinten dargestellt. Die Frankiermaschine ist mit einer Chipkarten-Schreib/Leseeinheit 70 ausgestattet, die hinter der Führungsplatte 2 angeordnet und von der Gehäuseoberkante 22 zugänglich ist. Nach dem Einschalten der Frankiermaschine mittels dem Schalter 71 wird eine Chipkarte 50 von oben nach unten in den Einsteckschlitz 72 eingesteckt und ist vom Benutzer für bestimmte Anwendungen programmierbar. Das erfolgt im Rahmen der von den Herstellern vorgegebenen Grenzen mit der Benutzerschnittstelle 88, 89 der Steuereinrichtung 1 des Meters. Die Folgekarten werden für vorbestimmte Funktionsanwendungen für die jeweilige Frankiermaschine vom Benutzer selbst eingerichtet. Zusätzlich können auch Chipkarten für vorbestimmte Funktionsanwendungen für die jeweiligen Peripheriegeräte der Frankiermaschine vom Benutzer selbst eingerichtet werden. Die Peripheriegeräte der Frankiermaschine sind an den Schnittstellen 98 und 99 elektrisch anschließbar und somit vom Meter entsprechend der Eingabe per Chipkarte ansteuerbar. Ein zugeführter auf der Kante stehender Brief 3, der mit seiner zu bedruckenden Oberfläche an der Führungsplatte anliegt, wird dann entsprechend der Eingabedaten mit einem Frankierstempel 31 bedruckt. Die Briefzuführöffnung wird durch eine Klarsichtplatte 21 und die Führungsplatte 2 seitlich begrenzt. Mit dem Einstecken einer ersten Chipkarte 50, die mit der Frankiermaschine zusammen ausgeliefert worden ist, wird eine vorbestimmte Kostenstelle als Gesamtkostenstelle eingestellt. Beispielsweise wird die Kostenstelle 1 voreingestellt, auf welche die Buchung erfolgt, wenn per Tastatur keine anderen vorbestimmten Eingaben getätigt werden, um den Zugriff auf andere Kostenstellen zu erlangen.

Die Frankiermaschine enthält in ihrem Programmspeicher 92 ein entsprechendes Anwendungsprogramm, so daß eine in die Chipkarten-Schreib/Leseeinheit 70 eingesteckte erste Chipkarte 50 eine Einstellung der Frankiermaschine für mindestens eine Funktionsanwendung auf der höchsten Hierarchieebene gestattet.

In einer Anwendung ist vorgesehen, daß die Steuereinrichtung 1 ein mit einem Mikroprozessor 91 mit zugehörigen Speichern 92, 93, 94, 95 ausgestattetes Steuergerät 90 und eine angeschlossene Benutzerschnittstelle 88, 89 aufweist, die in Abhängigkeit einer vorbestimmten Eingabe eine top-down-Initialisierung von mindestens einer eingesteckten aus einer Anzahl von weiteren Chipkarten 51, 52, 53 durch den Benutzer gestatten, um in Verbindung mit geeignet initialisierten Chipkarten die Funktionseingabe und die Verwaltung von zu buchenden Kostenstellendaten zu vereinfachen, wobei die vorgenannten weiteren Chipkarten 51, 52, 53 sequentiell in einen Einsteckschlitz 72 der Chipkarten-Schreib/Leseeinheit 70 eingesteckt und initialisiert werden, wobei unter Verwendung der Tastatur 88 und Anzeige 89 und mit Hilfe des Mikroprozessors 91 und der zugehörigen nichtflüchtigen Speicher innerhalb der Frankiermaschine eine Tabelle mit einer speziellen hierarchischen Struktur erstellt wird, indem die vorgespeicherte Struktur entsprechend modifiziert und einer jeweiligen Chipkartennummer zugeordnet in einem der zugehörigen nichtflüchtigen Speicher 94, 95 gespeichert wird, wobei die Chipkartennummer in einem dafür vorgesehenen Teil eines in den geschützten Speicherbereichen der weiteren bzw. Folge-Chipkarten 51, 52, 53 gespeicherten Kennungsstrings gespeichert wird.

Eine Folge-Chipkarte, die beim Datenaustausch nach einem bestimmten Protokoll gelesen bzw. beschrieben werden kann, wird nachfolgend mit Typ a bezeichnet, wobei natürlich auch andere Typen eingesetzt werden können.

Eine Prozessor-Chipkarte wird nachfolgend mit Typ c bezeichnet und arbeitet nach ISO7816, T1-Protokoll. Beispielsweise ist der Arbeitsspeicher ein 256 Byte-RAM, der Pro-zessor eine 8 Bit CPU, der nichtflüchtige Speicher ein 16 KByte EEPROM und der Nurlesespeicher ein 16 KByte ROM. Vorteilhaft kann eine Prozessor-Chipkarte von der Firma Orga, als Multifunktions-Chipkarte 50 und Masterkarte verwendet werden.

Eine andere Nachlade-Chipkarte mit viel Speicherplatz wird nachfolgend mit Typ b bezeichnet. Beispielsweise kann eine I$^2$CBus Speicherkarte mit 32 Kbyte nach ISO7816, insbesondere AM2C256 von der Firma AMMI, verwendet werden. Diese enthält einen Chip AT24C256 von der Firma Atmel. Weitere Chipkarten werden nachfolgend mit Typ n bezeichnet. Beispielsweise kann auch hier wieder eine einen Mikroprozessor aufweisende Chipkarte mit 8 Kbyte verwendet werden. Die weiteren Chipkarten der Typen b bis n betreffen beispielsweise folgende Funktionsanwendungen:

* Nachlade-Möglichkeit der Portogebührentabellen über Chipkarte 49.
* Klischee-Nachladen über Chipkarten (einzeln oder im Block)
* Stempelbilder-Nachladen über Chipkarten (Tagesstempel).
* Chipkarten mit zeitlimitierter Funktionenanwendung.
* Chipkarten mit PIN-Autorisierung von Funktionen.
* Chipkarten zur Einstellung der Peripheriegerätefunktion.
* Chipkarten zur Einstellung der Systemkonfigurierung.
* Chipkarten zur Aktivierung programmierter Druckbilder.

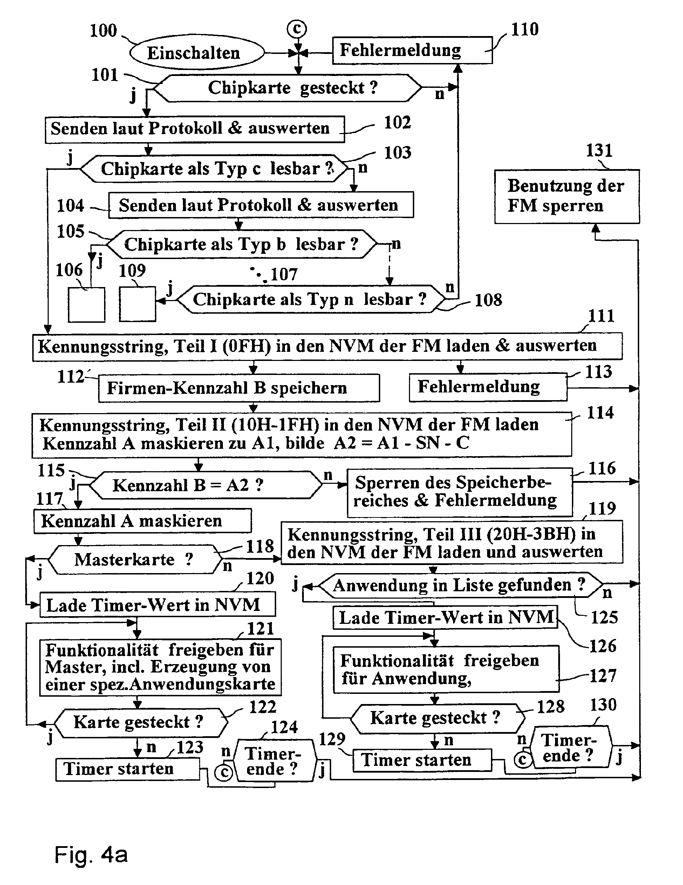

In der Figur 4a ist ein Ablaufplan für eine Steuerung durch den Mikroprozessor der Frankiermaschine bei der Dateneingabe mittels einer Chipkarte dargestellt. Nach einem Einschalten eines - nicht dargestellten - Netzteiles der Frankiermaschine mit dem Schalter 71, was im Schritt 100 vom Mikroprozessor 91 der Frankiermaschine registriert wird, signalisiert ein mit einer Kontaktiereinrichtung 74 der Chipkarten-Schreib/Leseeinheit 70 verbundener Mikroprozessor 75 dem Mikroprozessor 91 der Frankiermaschine, wenn eine Chipkarte in den Einsteckschlitz 72 eingesteckt ist, was im Schritt 101 vom Mikroprozessor 91 der Frankiermaschine registriert wird. Zwischen der Chipkarten-Schreib/Leseeinheit 70 und der Chipkarte erfolgt dann eine Kommunikation nach einem ersten vorbestimmten Protokoll und eine Auswertung im Schritt 102. Im Abfrageschritt 103 wird geprüft, ob die Chipkarte als Typ c lesbar ist. Ist das der Fall, wird vom Abfrageschritt 103 auf einen Schritt 111 verzweigt, um einen Teil I des Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird. Wenn aber die Chipkarte als Typ c nicht lesbar ist, wird vom Abfrageschritt 103 auf einen Schritt 104 verzweigt, um eine Kommunikation nach einem zweiten vorbestimmten Protokoll und eine Auswertung im Schritt 104, ob die Chipkarte als Typ b lesbar ist vorzunehmen. Ist also die Chipkarte als Typ b lesbar, wird vom Abfrageschritt 105 zur weiteren Datenverarbeitung durch den Mikroprozessor 91 der Frankiermaschine auf einen Schritt 106 verzweigt. In vergleichbarer Weise werden gegebenenfalls weitere Protokolle durchlaufen (nicht gezeigte Schritte 107), zur Feststellung im Abfrageschritt 108, ob die Chipkarte als Typ n lesbar ist, um dann zur weiteren Datenverarbeitung durch den Mikroprozessor 91 der Frankiermaschine auf einen entsprechenden Schritt 109 zu verzweigen. Die Reihenfolge der Kommunikationsschritte und zugehörigen Abfrageschritte ist beliebig und kann auch entsprechend der Häufigkeit gewählt sein. Anderenfalls, wenn der Typ der Chipkarte nicht erkannt wird, erfolgt nach einer Fehlermeldung im Schritt 110 eine Rückverzweigung auf den Schritt 101.

Im Unterschied zum US 5,490,077, wo die Reihenfolge festliegt und eine Chipkarte A zum Portogebührentabellenladen vor einer Chipkarte B gesteckt werden soll, welche beispielsweise eine Kostenstelle einstellt, ist es nach der Erstinitialisierung beliebig mit welcher Chipkarte das Einstecken begonnen wird. Die Reihenfolge für das sequentielle Einstecken einer Reihe von Chipkarten ist nur dann nicht beliebig, wenn der zu einer Funktion gehörende Dateninhalt noch nicht vollständig geladen wurde. Das jeweils für unterschiedliche Chipkarten-Typen erforderliche Protokoll kann gemäß Ablaufplan nach Fig.4a durch Auswerten der von der Chipkarte gesendeten Anwortdaten ermittelt werden. Das ermöglicht in vorteihafter Weise einen entsprechend der Anwendungsart optimalen Chipkarten-Typ einzusetzen, so daß ein teurer Chipkarten-Typ nur in den Fällen eingesetzt werden braucht, wo keine Alternative besteht.

Es gibt beim US 5,490,077 keine Masterkarte, d.h. die Chipkarten sind alle technisch und funktionell gleich. Eine Zuordnung der 5-stelligen Kostenstellennummer KST-Nr. ist nur dem Hersteller möglich. Im Unterschied dazu ist erfindungsgemäß durch den Benutzer eine freie Zuordnung von drei Stellen der 5-stelligen KST-Nr. möglich.

Ein Zeitfenster für das Einstecken einer Chipkarte ist beim US 5,490,077 eine unveränderliche feste Zeitperiode. Für das erste Einstecken der Chipkarte ist erfindungsgemäß nun kein Zeitlimit vorgegeben. In vorteilhafter Weise wird in einer dem Kennungsstring der Chipkarten entsprechenden Anwendungsart ein Timer-Wert in einen Bereich der nichtflüchtigen Speicher 94 oder 95 der Frankiermaschine geladen, welcher einen Zähler ausbildet, der ein Zeitfenster für eine Nachfolgehandlung definiert, die beispielsweise mit einer Folge-Chipkarte ausgeführt wird.

Wenn vom Abfrageschritt 103 auf einen Schritt 111 verzweigt wird, um einen Teil I des Kennungsstrings in den nichtflüchtigen Speicher 94 der Frankiermaschine zu laden, wobei durch den Mikroprozessor 91 der Frankiermaschine eine Auswertung der Firmen-Kennnummer (Firmen-ID) vorgenommen wird, kommt ein Chipkarten-Typ c zum Einsatz, bei welchem aus einer gespeicherten Firmen-Kennzahl B eine Information für den weiteren Betrieb der Frankiermaschine abgeleitet werden kann. Gegebenenfalls prüft der Mikroprozessor 91 die vorgenannte Firmen-Kennzahl B in bekannter Weise zusätzlich auf Vorliegen einer gültigen Firmen-ID. Anderenfalls wird im optionalen Schritt 113 eine Fehlermeldung abgegeben. Im Schritt 112 wird die Firmen-Kennzahl B in einem der nichtflüchtigen Speicherbereiche der Frankiermaschine gespeichert, um dann auf einen Schritt 114 zu verzweigen.

Im Schritt 114 wird ein Teil II des Kennungsstrings in den nichtflüchtigen Speicher 94 der Frankiermaschine geladen, wobei durch den Mikroprozessor 91 der Frankiermaschine eine Maskierung der Anfangs-Kennzahl A zur Ableitung einer ersten Kennzahl A1 erfolgt, mit welcher anschließend eine Rechenoperation zur Bildung einer zweiten Kennzahl A2 durchgeführt wird, um nachfolgend zu prüfen, ob der dem Kennungsstring entstammende erste Teil I und die Kennzahl A2 zueinander ein vorbestimtes Verhältnis haben. Zur Bildung einer zweiten Kennzahl A2 erfolgt eine Rechenoperation der Form:

$$A2 = A1 - SN - C \qquad\qquad (1)$$

mit der Serien-Nummer SN der Frankiermaschine und mit einer geheimen Konstanten C. Vom Mikroprozessor 91 der Frankiermaschine ist unter Verwendung der Firmenkennzahl B nachfolgend zu prüfen:

$$\text{Kennzahl B} = A2 \qquad\qquad (2)$$

In Auswertung der Gleichung (2) erfolgt bei mangelndem vorbestimmten Verhältnis ein Sperren des Speicherbereiches in der Frankiermaschine für vorbestimmte Anwendungen im Schritt 116 oder anderenfalls, beispielsweise falls die Firmen-Kennnummer (Firmen-ID) gleich der gebildeten zweiten Kennzahl A2 ist, wird auf einen Schritt 117 verzweigt. Nun kann eine weitere Maskierung der Kennzahl vorgenommen werden, um die Master-Karte zu identifizieren.

Im Abfrageschritt 118 wird geprüft, ob eine Master-Karte vorliegt. Ist das der Fall wird auf einen Schritt 120 verzweigt, um einen Timer-Wert in den nichtflüchtigen Speicher 94 der Frankiermaschine zu laden, wobei durch den Mikroprozessor 91 der Frankiermaschine im Schritt 121 die Funktionalität freigegeben wird, welche im Programmspeicher 92 der Frankiermaschine für die Master-Karte vorgesehen ist. Diese Funktionalität schließt eine Erzeugung einer speziellen Funktionenanwendungs-Karte mittels der Frankiermaschine ein, was in einer parallelen Anmeldung näher erläutert wird. Im Schritt 122 wird geprüft, ob die Karte noch immer gesteckt ist. Ist das der Fall, ist die Funktionalität weiter freigegeben. Anderenfalls wird im Schritt 123 ein Timer gestartet. Der Timer ist beispielsweise ein mittels Speicherzellen im flüchtigen Speicher 93 oder in einem der nichtflüchtigen Speicher 94, 95 der Frankiermaschine realisierter Rückwärtszähler, für welchen der Oszillator im Uhren/DatumsSchaltkreis 95 einen entsprechenden Takt liefert. Im Schritt 124 wird überprüft, ob das Timer-Ende erreicht ist. Ist das nicht der Fall und eine weitere Chipkarte ist gesteckt, dann wird zum Schritt 101 (Punkt c) zurückverzweigt. Diese Schleife zum Punkt c ermöglicht, das Nachladen nach dem Einstecken einer weiteren Chipkarte typunabhängig fortzusetzen. Bei Timerende, zum Beispiel bei Erreichen des Zählwertes Null, wird ein Interrupt für den Mikroprozessor 91 der Frankiermaschine ausgelöst. Im Folgeschritt 131 wird dann die weitere Benutzung der Frankiermaschine für mindestens die eine Funktionalität Frankieren gesperrt.

Wird im Abfrageschritt 118 festgestellt, daß keine Master-Karte vorliegt, wird auf einen Schritt 119 verzweigt, um den Teil III des Kennungsstringes in den nichtflüchtigen Speicher 94 oder 95 der Frankiermaschine zu laden und um eine Auswertung hinsichtlich der dort abstammenden Chipkartennummer vorzunehmen. Eine Anzahl von unterschiedlichen Anwendungsfunktionalitäten ist in einem Speicherbereich des nichtflüchtigen Speichers 94 oder 95 der Frankiermaschine gelistet, wo jeder Anwendungsfunktionalität eine entsprechende Chipkartennummer zugeordnet ist. Ist in der Liste einer bestimmten Chipkartennummer keine Anwendung zugeordnet gespeichert, wird vom Abfrageschritt 125 auf den Folgeschritt 131 verzweigt, um die weitere Benutzung der Frankiermaschine für mindestens die eine Funktionalität Frankieren zu sperren. Anderenfalls wird im Schritt 127 die gelistete Funktionalität entsprechend der Chipkartennummer freigegeben und im Schritt 129 ein Timer gestartet, nachdem im Schritt 128 festgestellt wurde, daß die Karte nicht mehr gesteckt ist. Der Timer erzwingt somit wieder, daß das Nachladen mit einer weiteren Karte fortgesetzt werden muß. Ist aber die erste Karte weiterhin gesteckt, erfolgt eine Rückverzweigung und die Funktionalität ist weiter freigegeben. Bei Timerende wird ein Interrupt für den Mikroprozessor 91 der Frankiermaschine ausgelöst und auf den Folgeschritt 131 verzweigt. Bei einer Folgechipkarte vom Typ a werden ebenfalls die vorgenannten Schritte 111 - 119 und 125 - 130 durchlaufen.

Erfindungsgemäß wird der Kennungsstring in der Frankiermaschine ausgehend von der höchsten Sicherheitsstufe abwärts geprüft und erschließt die anwendungsspezifisch erforderlichen Speicherbereiche im nichtflüchtigen Speicher der Frankiermaschine. Eine erkannte Lücke im Kennungsstring erzeugt eine Fehlermeldung und hat eine Sperrung des betreffenden Speicherbereiches im nichtflüchtigen Speicher der Frankiermaschine und/oder der Chipkarte zur Folge.

Der Kennungsstring hat eine schlüsselartige Funktion. Der Kennungsstring ist nichtflüchtig in der Chipkarte so gespeichert, daß mehrere Sicherheitsbereiche einbezogen sind, wobei zur Veränderung des im jeweiligen Sicherheitsbereich gespeicherten Teils des Kennungsstrings unterschiedliche Sicherheitsanforderungen zu erfüllen sind. Nachdem durch die Hersteller der erste und zweite Teil des Kennungsstrings beschrieben wurde, kann ein Benutzer der Frankiermaschine mit selbiger den dritten Teil des Kennungsstrings mit einer Chipkartennummer beschreiben. Der Mikroprozessors 91 ist programmiert, eine in der Chipkarte gespeicherte Chipkartennummer zu verändern und eine Zuordnung der Chipkartennummer zu gelisteten Anwendungsfunktionen im nichtflüchtigen Speicher der Frankiermaschine abzuspeichem.

Es ist vorgesehen, daß der Mikroprozessor 91 des Steuergerätes 90 programmiert ist, um in Verbindung mit geeignet initialisierten Chipkarten die Funktionseingabe und die Verwaltung von zu buchenden Kostenstellendaten zu vereinfachen, wobei die Funktionseingabe die top-down-Initialisierung von weiteren Chipkarten einschließt.

Die Chipkarten-Schreib/Leseeinheit 70 besteht aus einem zugehörigen mechanischen Träger für die Mikroprozessorkarte und Kontaktiereinheit 74. Letztere gestattet eine sichere mechanische Halterung der Chipkarte in Lese-Position und eindeutige Signalisierung des Erreichens der Leseposition der Chipkarte in der Kontaktierungseinheit, beispielsweise nach dem Push/Push-Prinzip taktil durch Druckpunkt signalisiert, Eject-Taste oder Display/Beeper-Meldung der Frankiermaschine, eine zuverlässige elektrische Kontaktierung von kontaktbehafteten Chipkarten gemäß ISO 7816 für mindestens 100.000 Kontaktierungszyklen sowie eine leichte Benutzbarkeit beim Stecken und Ziehen der Chipkarte. Die Mikroprozessorkarte mit dem Mikroprozessor 75 besitzt eine einprogrammierte Lesefähigkeit für alle Arten von Speicherkarten, sowie für Chipkarten mit und ohne PIN-Codierung. Eine Ver- oder Entschlüsselung für Sicherheitsalgorithmen (z. B. RSA, DES) ist möglich. Das Interface zur Frankiermaschine ist eine serielle Schnittstelle gemäß RS232-Standard. Die Daten-Übertragungsrate beträgt min. 1,2 K Baud. Eine Selbsttestfunktion mit Bereitschaftsmeldung ist ausführbar bzw. wird nach Einschalten der Stromversorgung mittels Schalter 71 selbsttätig ausgeführt. Die in den Einsteckschlitz 72 eingesteckte Masterkarte 50 erteilt mindestens eine Zugangsberechtigung zur Gesamt-Kostenstelle, d.h. alle ausgegebenen Master-Chipkarten greifen nur auf diese Kostenstelle zu. Danach existiert die Wahlmöglichkeit einer anderen Kostenstelle über Tastatur. Unter anderem sind Master-Chipkarten zur erfindungsgemäßen Definition der Chipkarten/Kostenstellen-Beziehung und zum Freigeben/Sperren von Karten vorgesehen. Es kann zur Erweiterung des Funktionsumfanges eine Zugriffsmöglichkeit auf definierte Kostenstellen über die Folgekarten mittels der Frankiermaschine geschaffen werden, wobei eine Speicherung der Zuordnung entsprechend einer beliebigen Hierarchie möglich ist.

Der Datenaustausch zwischen Chipkarte und Chipkarten-Schreib/Leseeinheit, welcher gemäß Schritt 102 beim Senden laut Protokoll durchgeführt wird, erfolgt nach dem Master/Slave-Verfahren, wie das prinzipiell bereits in der US 5,490,077 vorgeschlagen wurde. In der dortigen Lösung werden Daten aus dem ungesicherten Speicherbereich ausgelesen, in Form eines zehnten Datensatzes zur Frankiermaschine übermittelt und in deren vorbestimmte Speicherbereiche geladen.

Bei der erfindungsgemäß vorgeschlagenen Lösung zum Datenaustausch werden im Schritt 121 bzw. 127 besonders gesicherte Daten aus dem gesicherten Speicherbereich der Chipkarte zusätzlich ausgelesen, in Form mindestens eines weiteren zwölften Datensatzes zur Frankiermaschine übermittelt und in deren Speicherbereiche geladen.

Im Verfahren zum Datenaustausch zwischen einer Frankiermaschine und Chipkarten, wobei die Frankiermaschine mit einer Chipkarten-Schreib/Leseeinheit 70 für Chipkarten unterschiedlichen Typs und mit einer Steuereinrichtung 1 zum Datenladen bzw. zur Dateneingabe per Chipkarte ausgerüstet ist, ist vorgesehen, daß gesteuert durch die Steuereinrichtung 1 der Datenaustausch mittels Datensätzen anhand des spezifischen Protokolls für jeden Chipkartentyp erfolgt, wobei ein Laden eines Datensatzes erfolgt, der die Chipkartennummer einschließt, und mindestens mittels eines zusätzlichen Datensatzes Daten aus den speziell gesicherten nichtflüchtigen Speicherbereichen der Chipkarte in die nichtflüchtigen Speicherbereiche der Steuereinrichtung 1 der Frankiermaschine geladen werden. Der zusätzliche Datensatz schließt eine in speziell gesicherten nichtflüchtigen Speicherbereichen der Chipkarte gespeicherte Basisnummer BN und Folgenummer FN ein, wobei diese in die Frankiermaschine geladene Basisnummer BN mit einem dort gespeicherten ersten Code verglichen wird, um eine Zuordnung von in der Frankiermaschine gespeicherten Merkmalen/Daten zu einem zweiten Code zu ändern, der nachfolgend eingegeben wird. Das durchgeführte Laden der vorgenannten Datensätze aus den Speicherbereichen einer ersten Chipkarte 50 in die nichtflüchtigen Speicherbereiche der Steuereinrichtung 1 der Frankiermaschine weist einen Berechtigten aus, der beispielsweise dazu autorisiert ist, den zweiten Code per Tastatur in die Frankiermaschine einzugegeben. Die erste Chipkarte ist damit eine Masterkarte.

In den nichtflüchtigen Speicherbereichen wird vom Berechtigten, beispielsweise dem autorisierten Benutzer, eine Liste erstellt, wobei dem zweiten Code in der Liste mindestens eine der Anwendungsfunktionen zugeordnet ist.

Alternativ zum zweiten Code kann von dem Berechtigten eine Folgenummer FN in die Frankiermaschine per zweite Chipkarte (49) eingegeben werden, welche ebenfalls eine Nachladechipkarte ist. Die vorgenannte in die Frankiermaschine geladene Folgenummer FN hat eine vorbestimmte Beziehung zu einer nachfolgend in die Frankiermaschine geladene Basisnummer BN einer weiteren Nachladechipkarte 49. Aus der nachfolgend in die Chipkarten-Schreib/Leseeinheit 70 der Frankiermaschine eingesteckten Nachladechipkarte 49 werden Daten geladen, wenn die Basisnummer BN eine vorbestimmte Beziehung zur entsprechend der in der Frankiermaschine gespeicherten Folgenummer FN hat. Die nachfolgend in die Frankiermaschine geladene Basisnummer BN entspricht dem vorgenannten zweiten Code, der durch den Berechtigten prinzipiell auch per Tastatur eingegeben werden kann.

In vorteilhafter Weise kann nun mit einer Multifunktions-Chipkarte 50 sowohl der Zugriff auf alle gelistete Anwendungsfunktionen, als auch eine Nachladung von kryptographischen Sitzungsschlüsseln, Tariftabellen und anderen Nachladedaten durchgeführt werden. Änderungen der Tariftabellen können mit weiteren Chipkarten gleichen oder eines anderen Types nachgeladen werden. Das ermöglicht auch eine kostengünstige Lösung mit einer weiteren Nachladechipkarte 49, wenn eine einzelne Chipkarte die Nachladedaten aus Gründen der Speicherkapazität nicht vollständig enthalten kann. Auch eine weiteren Nachladechipkarte 49 kann einen Zugriff auf gelistete Anwendungsfunktionen, als auch eine Nachladung von kryptographischen Sitzungsschlüsseln, Tariftabellen und anderen Nachladedaten ermöglichen.

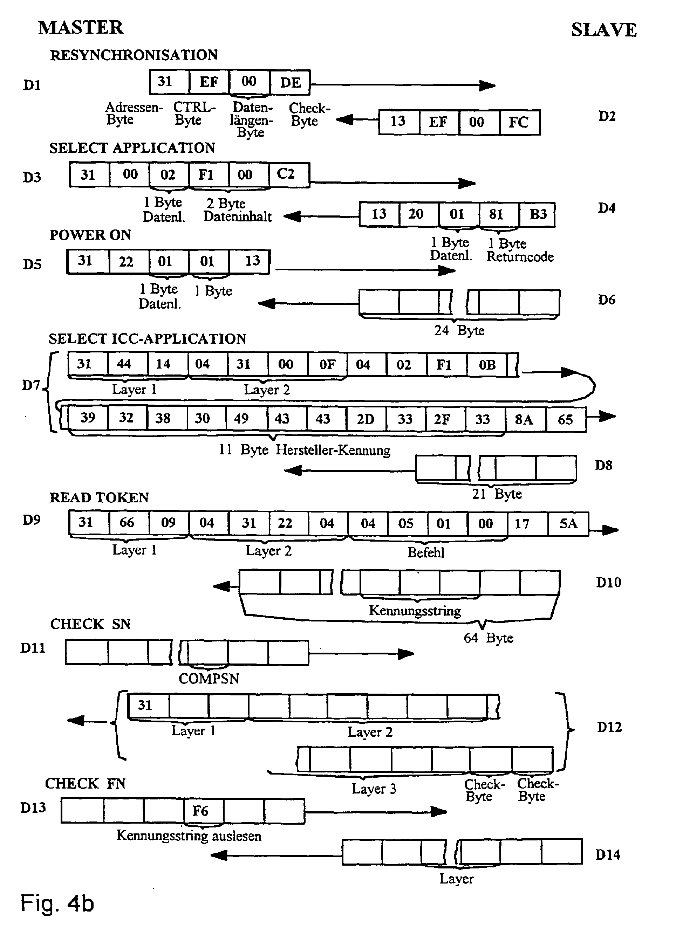

Gemäß Figur 4b erfolgt ein Datenaustausch, zwischen der Chipkarten-Schreib/Leseeinheit der Frankiermaschine der Chipkarte, wobei die Chipkarten-Schreib/Leseeinheit der Frankiermaschine als Master fungiert und einen ersten Datensatz D1 aussendet. Die Darstellung des ersten Datensatzes D1 zeigt vier Felder für ein Adressen-Byte, ein CTRL-Byte, ein Datenlängen-Byte und ein Check-Byte. Die Chipkarte arbeitet als Slave und sendet einen zweiten Datensatz D2 mit gleichen Aufbau an die Chipkarten-Schreib/Leseeinheit zurück. Die Adressen- und das Check-Byte sind gegenüber dem ersten Datensatz D1 entsprechend geändert.

Das Adressen-Byte des ersten Datensatzes D1 und aller weiteren Datensätze mit einer ungeraden Nummer kennzeichnet die Geräteadresse des SCP-Slave. Das SCP (Standard Communication Protocol) ist an das ISO/OSI-Architekturmodell angelehnt. Die sieben Schichten des Modells sind im SCP in drei Schichten zusammengefaßt: Kommunikations-, Transport- und Leitungsschicht. In der Leitungsschicht wird die Baudrate und der Rahmen für eine asynchrone Halbduplex-Blockübertragung festgelegt. Die übergeordnete Transportschicht dient dem fehlerfreien und vollständigen Transport der Daten zur jeweiligen Adresse. Die Kommunikationsschicht enthält allgemeine Steuerbefehle für die Kommunikationspartner. Der Datenaustausch wird vorzugsweise anhand der Transportschicht verdeutlicht. Das Kontroll-Byte (CTRL-Byte) im zweiten Feld des dargestellten ersten und zweiten Datensatzes D1, D2 läßt drei Befehlstypen zu und zeigt hier den RESYNC-Befehl EF. Letzterer wird gesendet, wenn ein neues Protokoll begonnen wird und dient dem Zurücksetzen der Empfangs- und Sendefolgezähler. Das Datenlängen-Byte im dritten Feld zeigt in diesem Fall die Datenlänge Null an, da keine Daten gesendet werden. Das Check-Byte ist vorzugsweise das Ergebnis einer XOR-Verknüpfung der vorgenannten Bytes eines Datensatzes (Übertragungsblockes). Der dritte Datensatz D3 enthält das SELECT APPLICATION-Kommando F1 im vierten Feld. Dieses Kommando setzt den SCP-Slave zurück und selektiert ein Anwendungsprotokoll. Ein nachfolgendes Datenfeld (fünfte Feld) enthält die Nummer der gewählten Application, hier 00 kennzeichnend für ein T = 14 Protokoll der Leitungsschicht. Die Antwort 81 im vierten Feld des vierten Datensatzes D4 ist ein Return-Code. Das Kommando 01 im vierten Feld des fünften Datensatzes D5 signalisiert, daß die Spannung eingeschaltet ist. Der sechste Datensatzes D6 enthält eine entsprechende Antwort. Im siebenten Datensatz D7 wird die Kennung des Kartenherstellers und im achten Datensatz D8 eine entsprechende Antwort übermittelt. Im neunten Datensatz D9 wird zum Veranlassen des Auslesens des Kennungsstrings das Kommando READ TOKEN und im zehnten Datensatz D10 eine entsprechende Antwort mit dem Kennungsstring übermittelt. Die Eingabe der Kostenstellen-Nummer zur Gesamt-Kostenstelle durch die Chipkarte erfolgt beispielsweise durch Maskieren des Kennungsstrings bzw. durch eine spezielle Rechenoperation und bewirkt eine Zugangsberechtigung zur Frankiermaschine auf indirekte Weise. Zusätzlich wird ein Benutzer bzw. die Frankiermaschine durch eine Spezialnummer oder Code bei der Chipkarte dazu autorisiert, besonders gesicherte Daten zusätzlich aus dem gesicherten Speicherbereich der Chipkarte auszulesen. Erfindungsgemäß enthält ein elfter Datensatz D11 eine Spezialnummer, vorzugsweise die Seriennummer SN der Frankiermaschine, und ein sechstes Kommando COMPBN. Der Datensatz D11 wird von der Frankiermaschine über die Chipkarten/Leseeinheit zur Chipkarte 50 übermittelt. Das sechste Kommando COMPBN weist die Chipkarte an, einen Vergleich der in der Chipkarte gespeicherten Seriennummer SN mit der im elften Datensatz D11 übermittelten SN durchzuführen. Die Chipkarte enthält mindestens 1 Byte der Seriennummer SN der Frankiermaschine, die zum Benutzerkreis gehört. Die Chipkarte prüft also, ob sie zum Benutzerkreis der Frankiermaschine gehört, indem sie Teile der Seriennummer SN der Frankiermaschine mit den intern gespeicherten Teilen der Seriennummer SN der Frankiermaschine vergleicht. Das Vergleichsergebnis wird der Chipkarten/Leseeinheit übermittelt, welche (in der 1.Variante) bei positiven Vergleichsergebnis folgenden zwölften Datensatz D12 empfängt:

Byte / Schicht / Bemerkung zum Inhalt

1. (1.Layer) Byte mit der gespiegelten Adresse des Datensatzes D11,
2. (1.Layer) Kontrollbyte,
3. (1.Layer) Datenlängenbyte,
4. (2.Layer) Kontrollbyte,
5. (2.Layer) Adressenbyte,
6. (2.Layer) Datenlängenbyte,
7. (2.Layer) Kontrollbyte,
8. (2.Layer) Kommandobyte,
9. (2.Layer) Datenlängenbyte für nächste Layer,
10. (3.Layer) Datenbyte mit einer einzigartigen Nummer BN,
11. (3.Layer) Datenbyte mit einer einzigartigen Nummer FN,
12. (3.Layer) Datenbyte mit einem verschlüsselten Sitzungsschlüssel $K1[KEY_{n+1}]$,
13. (3.Layer) Datenbyte für Nachladedaten ND,
14. (3.Layer) Datenbyte mit einem MAC zu BN, FN und ND,
15. (3. Layer) Checkbyte,
16. (2.Layer) Checkbyte.

Der von der Chipkarten/Leseeinheit empfangene zwölfte Datensatz D12 enthält bei positivem Vergleichsergebnis eine einzigartige Basisnummer BN als ersten Code, um eine Zuordnung von in der Frankiermaschine gespeicherten Merkmalen/ Daten zu einem zweiten Code zu ändern, der nachfolgend eingegeben wird. Letzterer kann beim Initialisieren einer Folgekarte manuell per Tastatur oder beim Funktionenaufruf durch eine nachfolgend eingesteckte zweite Chipkarte 49 eingegeben werden.

Diese Basisnummer BN wird mit der aktuellen Master-Chipkarte in die Frankiermaschine eingegeben. Bei negativem Vergleich, d.h. Vergleich der gespeicherten mit der übermittelten Spezialnummer oder Code, wird eine andere einzigartige Basisnummer BN auf einen vorbestimmten Wert übermittelt. Es kann damit aber kein Zugang zu einem bestimmten Speicherbereich der Frankiermaschine erzielt und bestimmte Funktionen können nicht aufgerufen werden, weil die entsprechende Zuordnung in der Frankiermaschine ebenfalls nicht existiert. Beispielsweise wird auf indirekte Weise ein Abrechnen und Frankieren unmöglich gemacht, ohne die anderen Funktionen der Frankiermaschine zu sperren.

Außerdem kann in der Frankiermaschine die Richtigkeit der Reihenfolge geprüft werden, indem die aus der vorherigen Chipkarte geladene Folgenummer $FN_n$ in eine Folgenummer $FN_{n+1}$ umgewandelt und nichtflüchtig gespeichert wird. Sie kann dann mit einer aktuell geladenen Folgenummer $FN_{n+1}$ verglichen werden. Falls die im zwölften Datensatz D12 übermittelte Folgenummer $FN_{n+1}$ einer ebensolchen in der Frankiermaschine gespeicherten Folgenummer $FN_{n+1}$ entspricht, dann ist die Chipkarte eine in der richtigen Reihenfolge gesteckte Folgekarte. Alternativ zeigt ein Zeiger auf eine der gelisteten Folgenummern entsprechend der geladenen Folgenummer. Anschließend wird die Zeigerstellung verändert und der Zeiger zeigt auf die nächste Folgenummer, welche entsprechend der Reihenfolge beim nächsten Nachladen erwartet wird. Der Zeiger wird als Vor/Rückwärts-Zähler und das Verändern wird als Vor/Rückwärts-Zählen ausgebildet und in den Speicherzellen des nichtflüchtigen Speichers der Frankiermaschine realisiert.

Erfindungsgemäß sind die übermittelten Daten BN, FN und ND durch einen Message Authentification Code (MAC) gesichert. Nach dem Datenaustausch zwischen dem OTP-Prozessor im Sicherheitsmodul der Frankiermaschine und der Chipkarten/Leseeinheit, verarbeitet der OTP-Prozessor (One Time Programamble) der Frankiermaschine den Datensatz D12, indem er die übermittelten Daten BN, FN mittels einem geheimen Schlüssel zu einem Reference-MAC verschlüsselt. Ein erster aktueller geheimer Schlüssel K1 wird verschlüsselt zu Kb[K1] und anfangs bei der Initialisierung im NVRAM der Frankiermaschine abgelegt. Letzterer kann im OTP-Prozessor mit einem im internen OTP-ROM gespeicherten DES-Algorithmus (Data Encrytion Standard) und geheimen Basisschlüssel Kb entschlüsselt werden. Der erste aktuelle geheime Schlüssel K1 wird zum Verschlüsseln der vorgegebenen Basisnummer BN und Folgenummer FN zum Reference-MAC benutzt, wobei der Vorgang ausschließlich OTP-intern abläuft und somit nicht ausgelesen werden kann. Die Authentifizierung der übermittelten Daten BN, FN, ND in der Frankiermaschine erfolgt durch Vergleich des übermittelten MAC mit dem Reference-MAC. Der Vergleich erfolgt dabei vorzugsweise vor der vorgenannten separaten Auswertung der übermittelten Daten BN, FN.

Unter den übermittelten Daten ist auch ein verschlüsselter Sitzungsschlüssel $K1[KEY_{n+1}]$. Auch in der Chipkarte sind also keine solchen Geheimdaten, wie der geheime Basisschlüssel Kb, gespeichert, sondern statt dessen ein verschlüsselter Sitzungsschlüssel $K1 [KEY_{n+1}]$. Wenn die Authentifikation erfolgreich war, wird letzterer im NVRAM der Frankiermaschine ebenfalls verschlüsselt als Krypto-Schlüssel gespeichert. Dabei wird zunächst der verschlüsselte

Sitzungsschlüssel K1[KEY$_{n+1}$] entschlüsselt zum Sitzungsschlüssel KEY$_{n+1}$, wobei der erste aktuelle geheime Schlüssel K1 auf den DES-Algorithmus angewendet wird. Dann wird der unverschlüsselte Schlüssel KEY$_{n+1}$ im OTP-Prozessor verschlüsselt zum Kb[KEY$_{n+1}$], wobei der geheime Basisschlüssel Kb auf den DES-Algorithmus angewendet wird, und bildet so die Grundlage zur Verwertung als nächsten aktuellen geheimen Sitzungsschlüssel, durch Entschlüsseln des im NVRAM gespeicherten Krypto-Schlüssels Kb[KEY$_{n+1}$]. Der vorgenannte Sitzungsschlüssel KEY$_{n+1}$ kann vielfältig eingesetzt werden. Beispielsweise ist letzterer erforderlich, um Dienstleistungsmerkmale oder Daten, die extra bezahlt werden müssen, mit weiteren Chipkarten aufzustocken bzw. zu erneuern oder zuzuordnen.

Die erste gesteckte Chipkarte wird auch als Master-Chipkarte 50 bezeichnet. Nach deren Autorisierung werden beispielsweise auch Dienstleistungsmerkmale freigegeben. Dabei kann es nötig sein, eine Kombination aus bereits gespeicherten und einem zu ladenden Dienstleistungsmerkmal zu bilden. Für das zu ladende Dienstleistungsmerkmal sind nun manuelle Eingaben zu tätigen oder zuvor eine weitere Chipkarte 49 mit dem zu ladenden Dienstleistungsmerkmal in den Slot einzustecken, nachdem die Master-Chipkarte 50 entfernt wurde.

Hierzu wird eine weitere Chipkarte 49 eingesteckt, die mit einer entsprechenden äußeren Kennzeichnung für den Benutzer versehen ist. Es werden wieder Datensätze ausgetauscht und nach dem Empfang des zwölften Datensatzes D12 und der o.g. Autorisierung und Auswertung der übermittelten Daten wird ein dreizehnter Datensatz D13 von der Frankiermaschine mit der Chipkarten/Leseeinheit an die Chipkarte übermittelt, wobei der Datensatz D13 die Folgenummer FN$_{n+1}$ einschließt, die mit der Vorgänger Chipkarte 50 eingegeben worden ist. Immer dann, wenn die in einer weiteren Chipkarte 49 gespeicherte Basisnummer BN$_{n+1}$ ein bestimmtes Verhältnis zur Folgenummer FN$_{n+1}$ hat, die mit einer Vorgänger-Chipkarte (die die Basisnummer BN$_n$ hatte) in die Frankiermaschine eingegeben wurde, dann ist die richtige Reihenfolge des Einsteckens und eine gültige weitere Chipkarte verwendet worden. Auf diese Weise wird also auch der Folgekarte mitgeteilt, welche Basisnummer erwartet wird. Nach einer Prozedur (Master/Slave-Verfahren), wobei ein Kommando CHECK FN (im Datensatz D13) von der Chipkarten/Leseeinheit an die Chipkarte gegeben wird, antwortet die Chipkarte mit einem vierzehnten Datensatz D14, welcher weitere gewünschte Daten aus gesicherten Speicherbereichen der Chipkarte enthält.

Anderenfalls, wenn die von der Frankiermaschine an die Chipkarte gesendete Folgenummer FN$_{n+1}$ kein bestimmtes Verhältnis zur Basisnummer BN$_{n+1}$ der eingesteckten Chipkarte hat, wird in Auswertung des vierzehnten Datensatzes D14 in der Anzeige der Frankiermaschine FM ein Hinweis angezeigt, daß diejenige Chipkarte entsprechend der Folgenummer FN$_{n+1}$ einzustecken ist.

In einer weiteren Ausführungsvariante wird nun gezeigt, wie sich weitere Merkmale, beispielsweise Stückzahl- oder Time Limit mit weiteren Chipkarten, die extra bezahlt werden müssen, aufstocken bzw. erneuern lassen. Dazu ist wieder die Folgenummer FN erforderlich. Nach einem ersten Austausch einer Anzahl an Datensätzen und einem anschließenden SN-Vergleich in der Chipkarte, wird das Vergleichsergebnis der Chipkarten/Leseeinheit übermittelt, welche bei positiven Vergleichsergebnis nun folgenden zwölften Datensatz D12 empfängt:

Byte / Schicht / Bemerkung zum Inhalt

1. (1.Layer) Byte mit der gespiegelten Adresse des elften Datensatz D11,
2. (1.Layer) Kontrollbyte,
3. (1.Layer) Datenlängenbyte,
4. (2. Layer) Kontrollbyte,
5. (2. Layer) Adressenbyte,
6. (2.Layer) Datenlängenbyte,
7. (2.Layer) Kontrollbyte,
8. (2.Layer) Kommandobyte,
9. (2.Layer) Datenlängenbyte für nächste Layer,
10. (3.Layer) Datenbyte bei positiven Vergleichsergebnis (P),
11. (3.Layer) Datenbyte mit einer einzigartigen Nummer BN,
12. (3.Layer) Datenbyte mit einer einzigartigen Nummer FN,
13. (3.Layer) Datenbyte mit einem verschlüsselten Sitzungschlüssel K1[KEY$_{n+1}$],
14. (3.Layer) Datenbyte mit Vorgabestückzahl VGS für Frankierungen,
15. (3.Layer) Datenbyte mit einer Zeitgrenze TL für Features der FM,
16. (3.Layer) Datenbyte für Nachladedaten ND,
17. (3.Layer) Datenbyte für Nachladedaten ND,
18. (3.Layer) Datenbyte für Nachladedaten ND,
19. (3.Layer) Datenbyte mit einem MAC zu (P), FN, VGS, TL und ND,
20. (3. Layer) Checkbyte,

21. (2.Layer) Checkbyte,

Das vierzehnte und fünfzehnte Byte sind für zusätzliche Aufgaben vorgesehen, aber nicht zwingend erforderlich. Weitere Bytes, beispielsweise das sechszehnte bis achtzehnte Byte, sind für Nachladedaten ND vorgesehen. Die Autorisierung der Nummern BN, FN, Vorgabedaten VGS, TL bzw. Nachladedaten ND erfolgt in der Frankiermaschine wieder anhand des zugehörigen MAC. Das zehnte Byte für P oder N ist also fakultativ und muß nicht zwingend übermittelt werden. Bei negativen Vergleichsergebnis (N) wird im zwölften Datensatz D12 eine ungültige Basisnummer BN, Folgenummer FN oder Vorgaben von der Größe Null übermittelt.

Der von der Chipkarten/Leseeinheit empfangene zwölfte Datensatz D12 enthält bei positivem Vergleichsergebnis eine einzigartige Basisnummer BN als ersten Code, um eine Zuordnung von in der Frankiermaschine gespeicherten Merkmalen/ Daten zu einem zweiten Code zu ändern, der manuell oder durch eine nachfolgend eingesteckte zweite Chipkarte 49 eingegeben wird. Zusätzlich ist die vorgenannte Zuordnung für eine durch Vorgabestückzahl VGS für Frankierungen limitiert und muß dann erneuert werden, wenn das Limit erreicht ist (Stückzahl-Sleeping-Modus für Chipkarte). Vorzugsweise ist in der Frankiermaschine eine separate Limitierung der Stückzahl für Frankierungen für jede Kostenstelle KST vorgesehen. Das schafft eine zusätzliche Sicherheit, wenn abteilungsweise abgerechnet werden soll, daß nicht eine Abteilung (KST) am Limit alle anderen Abteilungen (KSTn) am Frankieren hindert. Somit können andere Kostenstellen KST weiterhin frankieren oder die nicht zum Frankieren gehörigen Dienstleistungsmerkmale nutzen. Erfindungsgemäß ist zu jeder Postklasse PK (Portowert) eine Stückzahlgrenze vorgegeben. Die Vorgabestückzahl $VGS_{PK1}$ ist beispielsweise für Frankierungen einer Postklasse PK1 für Portowerte 1.-DM vorgesehen. Durch rechtzeitiges Einstecken von einer weiteren zugeschickten Chipkarte, kann die Stückzahlgrenze neu für eine KST und/oder eine einzelne Postklasse PK (Portowert) eingegeben werden (ohne Abrechnung, weil die Chipkarte bei FP vorausbezahlt wird).

Erfindungsgemäß ist zu jeder Funktion, die mittels der einzigartigen Nummer BN erreicht wird, eine Zeitgrenze (Time Limit) TL für alle Features der FM vorgegeben.

Erfindungsgemäß sind mindestens einige oder alle Vorgaben BN, FN, VGS und TL sowie Nachladedaten ND durch einen MAC (Message Authentification Code) gesichert. Der OTP-Prozessor (One Time Programable) der Frankiermaschine verarbeitet z.B. den Datensatz D12 nach Datenaustausch zwischen dem OTP-Prozessor (im Sicherheitsmodul) der FM und der Chipkarten/Leseeinheit, indem er alle Vorgaben BN, FN, VGS und TL sowie Nachladedaten ND mittels einem geheimen Schlüssel zu einem Reference-MAC verschlüsselt. Dabei kann das Prinzip der kumulativen MAC-Bildung (with DES-Algorithmus and Cipher Block Chaining Mode) verwendet werden, um eine beliebig große Anzahl an so abgesicherten Bytes zu authentisieren. Dabei werden 8 Byte breite Eingangswerte mit dem DES (Data Encrytion Standard) verschlüsselt und die 8 Byte breiten Ausgangswerte mit 8 Byte breiten zweiten Eingangswerten XOR- verknüpft und dann wieder mit dem DES verschlüsselt usw.

Im OTP-ROM ist wieder ein geheimer Schlüssel und der DES-Algorithmus gespeichert, um den Reference-MAC in o.g. Art und Weise zu bilden. Um die Authentizität aller Vorgaben BN, FN, VGS und TL sowie Nachladedaten ND zu überprüfen, werden der OTP-intern gebildete Reference-MAC und der zum OTP übermittelte MAC verglichen. Bei Übereinstimmung werden die Vorgaben BN, FN, VGS und TL sowie Nachladedaten ND nichtflüchtig zusammen mit dem MAC im NVRAM gespeichert.

Der OTP-Prozessor der Frankiermaschine überprüft vor jeder Frankierung die Überschreitung des durch VGS gesetzten Stückzahl-Limits entsprechend der eingestellten Kostenstelle KST. Die Erfindung schließt den Gedanken mit ein, das Stückzahl-Limit mit weiteren Chipkarten, die extra bezahlt werden müssen, aufzustocken bzw. zu erneuern.

Der OTP-Prozessor überprüft vor jeder Benutzung eines Features die Überschreitung des durch TL gesetzten Time Limits entsprechend der eingestellten Kostenstelle KST. Die Erfindung schließt den Gedanken mit ein, den Time Limit für einzelne Features mit weiteren Chipkarten, die extra bezahlt werden müssen, aufzustocken bzw. zu erneuern.

Anschließend werden beispielsweise die Features freigegeben. Dabei kann es nötig sein, eine Kombination aus bereits gespeicherten und einem zu ladenden Features zu bilden. Für das zu ladende Features sind nun manuelle Eingaben zu tätigen oder zuvor eine weitere Chipkarte 49 mit den zu ladenden Dienstleistungsmerkmalen in den Slot einzustecken, nachdem die Master-Chipkarte 50 entfernt wurde.

Nach einer Prozedur (Master/Slave-Verfahren), wobei ein Kommando CHECK FN (im Datensatz D13) von der FM an die Chipkarten/Leseeinheit gegeben wird, antwortet die Chipkarten/Leseeinheit mit einem vierzehnten Datensatz D14 , welcher u.a. die gewünschten Daten (Dienstleistungsmerkmal und/oder Code) aus der Chipkarte enthält.

Um das Stückzahl- oder Time Limit mit weiteren Chipkarten, die extra bezahlt werden müssen, aufzustocken bzw. zu erneuern ist die Folgenummer FN erforderlich. Immer dann, wenn die in der Chipkarte gespeicherte Basisnummer BN mit der Folgenummer FN ein vorbestimmtes Verhältnis hat, die mit einer Vorgänger-Chipkarte in die Frankiermaschine eingegeben wurde, dann ist entsprechend VGS bzw. TL aufzustocken (addieren) bzw. auf den Wert von VGS bzw. TL zu erneuern (volltanken). Die Chipkarte sendet dann einen entsprechenden vierzehnten Datensatz an die Frankiermaschine.

Jede Frankiermaschine mit Chipkartenleser wird mindestens mit einer Masterkarte vom Typ c ausgeliefert. Die zweite und weitere ausgelieferte Karten sind sogenannte Folgekarten vom Typ a. Sie sind für alle Funktionenanwendungen Zugang/Kostenstellenhandling geeignet. Jede Chipkarte hat eine laufende Chipkarten-Nummer, die eine eindeutige Kennung für jede Chipkarte ist, d. h. die Chipkarten sind im personalisierten Zustand noch nicht bestimmten Frankiermaschinen zugeordnet. Die neu in Betrieb zu nehmende Frankiermaschine wird selbsttätig die erste gesteckte Chipkarte als Masterkarte werten und eine entsprechende Chipkartennummer in ihren Speichern hinterlegen. Die Zuordnung der Funktionalität jeder existierenden bzw. nachgelieferten Karte geschieht frankiermaschinen-intern über eine Tabelle. Die Funktionalität der Masterkarte ist wie folgt definiert:

a) Als Voreinstellung wird die Kostenstellen KST 1 angewählt, dieser Voreinstell-Wert ist änderbar.
b) Es ist manuell möglich, Kostenstellen KST einzurichten, zu löschen und anzuwählen.
c) Es ist möglich, Folgekarten bestimmten Kostenstellen KST zuzuordnen, Zuordnungen zu ändern oder zu löschen.
d) Alle verfügbaren Verknüpfungsbedingungen sind definierbar. Das betrifft auch die Zuordnung von Limit-Daten zu Folgekarten, bzw. die Tabelle ist entsprechend mit Eingabe-Daten auszufüllen.
e) Zugriff auf die volle Funktionalität der Frankiermaschine.

Die Funktionalität der Folgekarte ist wie folgt definiert:

a) Automatisches Anwählen einer festgelegten Kostenstelle KST oder KST-Gruppe mit deren Verknüpfungsbedingungen (Werbeklischee-Nr., evtl. mit Wertbegrenzung je Zeiteinheit, Limit-Daten, etc.)
b) Kostenstellen/Werbeklischee-Zuordnungen setzen, ändern oder löschen. Freie Wahl aller in der FM vorhandenen Klischees.
c) Funktion "Folgekarten-Duplizieren".

Die Sicherheit in punkto Karten-Kopierschutz wird durch hersteller- und anwenderspezifische Informationen in einem schreibgeschützten Bereich der Karte gewährleistet. Die Chipkarten sind herstellerseitig mit einer FPspezifischen Kennzahl B im schreibgeschützten Teil I des Kennungsstrings versehen. Zusätzlich wird seitens der Frankiermaschine bei Erst-Autorisierung die Kennzahl A schreibgeschützt gespeichert, die sich aus der Seriennummer der Frankiermaschine und einer angehängten beispielsweise 3-stelligen fortlaufenden Zahl 505010 001 zusammensetzt. Unterschieden wird zwischen Masterkarte und Folgekarten, jedoch besteht der Unterschied nur darin, daß die Masterkarte die Erste von der Frankiermaschine autorisierte Karte ist, ansonsten ist die Struktur des Karteninhalts identisch.
Die Frankiermaschine Jet Mail® ist in der Lage, selbsttätig Chipkarten zur Benutzung an ihr zu autorisieren. Dieses geschieht aus einem dafür vorgesehenen Kostenstellen-Menü-Unterpunkt heraus, indem nach dem Stecken der Masterkarte und Anwahl der Autorisierungsfunktion eine beliebige Folgekarte einer vorhandenen oder neu definierten Kostenstelle oder Gruppe zugeordnet wird. Dazu wird die entsprechende Folgekarte gesteckt und seitens der Frankiermaschine mit einer Kennzahl A beschrieben. Bei Benutzung der Chipkarte werden beide Kennzahlen (A und B) aus der Chipkarte in die Frankiermaschine geladen und dort nach einer Rechenoperation miteinander verglichen. Beispielsweise bei Gleichheit erfolgt die Auswertung der ausgeblendeten letzten 3 Stellen der Kennzahl A über eine Tabelle u.a. bezüglich, welcher Kostenstellennummer diese Karte zugeordnet ist. Der erste Eintrag in der Tabelle erfolgt für die Masterkarte. Die Frankiermaschine ist ohne eine eingesteckte, die vorgenannte Autorisierungsfunktion aufweisende, Masterkarte gesperrt.
In der Frankiermaschine liegt für den ersten Ast gemäß Figur 1b beispielsweise folgende Tabelle gespeichert vor:

| Karten-Nr. | KST -Nr. | Timer -Wert | Funktion Limit | Werbe-Klischee | Wertgrenze | aktueller Rest-Wert |
|---|---|---|---|---|---|---|
| 1234567801 | 1-50 | 20 sec | all/5000 | Nein | R3.x = 5000,- | R1.x = 99,- |
| 1234567802 | 1-4 | 10 sec | F1/2000 | 1 | R3.y = 2000,- | R1.y = 255,- |
| 1234567803 | 1 | 2 sec | F3/2000 | 1 | R3.1 = 1000,- | R1.1 = 99,- |
| 1234567804 | 3 | 2 sec | F4/2000 | Nein | R3.3 = 1000,- | R1.3 = 10,- |
| 1234567805 | 4 | 2 sec | F5/3500 | 5 | R3.4 = 3000,- | R1.4 = 2005,- |
| 1234567806 | 2 | 1 sec | F6/0000 | Nein | R3.2 = 0,- | R1.2 = 0,- |

Der Benutzer hat die Möglichkeit, sich die Chipkarte vom Typ a mit der aktuellen Kostenstellennummer zu beschriften. Änderungen von Zuordnungen zwischen Chipkarten und Kostenstellennummern sind nur über die Masterkarte möglich. Damit sind bestimmte Menüpunkte im Kostenstellenmenü nur mit gesteckter Masterkarte freigegeben. Weiterhin sind auch bestimmte Verknüpfungsbedingungen für die Kostenstellen beispielsweise bezüglich Werbeklischee-Nr., Wertbegrenzung je Zeiteinheit analog änderbar. Auf Ungleichheit bzw. unbekannte, ungültige Karten wird seitens der Frankiermaschine mit einer entsprechenden Fehlermeldung reagiert. Durch die Funktion " Folgekarten-Duplizieren" ist die Frankiermaschine Jet Mail® weiterhin in der Lage, mit Hilfe der Masterkarte selbsttätig Folgekarten zur Benutzung an ihr zu autorisieren. Dazu wird die entsprechende Folgekarte gesteckt und seitens der Frankiermaschine mit der Kennzahl A beschrieben. Für jede Kostenstelle KST kann eine zeitlich begrenzt gültige jedoch (monatlich) erneuerbare Wertgrenze für den Verbrauch an Frankierwerten je Kalendermonat mit Hilfe der Masterkarte festgelegt werden. Für jede Kostenstelle KST ist maximal das gesamte in der Frankiermaschine Jet Mail® vorhandene Guthaben verfügbar. Mit Beginn eines neuen Kalendermonats wird die vorbestimmte Wertgrenze übernommen, es gibt keine Überträge. Änderungen von Zuordnungen zwischen Chipkarten-Nr. und KST-Nr., Funktionen mit Limit-Daten sowie den Wertbegrenzungen sind nur mit Hilfe der Masterkarte möglich. Die Bedienoberfläche der Frankiermaschine ist jederzeit komplett vorhanden, jedoch wird bei Anwahl der für die Masterkarte reservierten Punkte, bei nicht gesteckter Masterkarte, dieselbe als Autorisierung verlangt. Die anzeigbare Tabelle zur Verwaltung der Chipkarten-Funktionalität kann z.B. die Felder: Chipkarten-Nr. / KST-Nr. / Timer-Wert / Funktion mit Limit / Werbeklischee-Zuordnung / Wertgrenze / aktueller Rest-Wert enthalten. Für sogenannte Gruppenkarten ist es grundsätzlich möglich, daß auch einer Karten-Nummer Gruppen von Kostenstellen x, y zugeordnet werden. Das mit der Chipkarten-Schreib/Leseeinheit 70 verbundene Steuergerät 90 der Frankiermaschine hat einen nichtflüchtigen Speicher 94, 95 mit erfindungsgemäßen Speicherbereichen A, B, C für eine Zuordnung von gelisteten Anwendungsfunktionen mit Limit-Daten zu einer vorbestimmten Chipkarte und für Parameter. Die Anzeige der Zuordnung kann entsprechend der vorgenannten Tabelle oder in einer ähnlichen Form erfolgen.

Erfindungsgemäß ist für eine Anordnung zum Datenaustausch zwischen einer Frankiermaschine und Chipkarten, wobei die Frankiermaschine mit einer Chipkarten-Schreib/Leseeinheit 70 und zugehörigen Steuereinrichtung 1 ausgestattet ist, vorgesehen, daß ein Mikroprozessor 85, 91 der Steuereinrichtung 1 mit der Chipkarten-Schreib/Leseeinheit 70 und mit einem nichtflüchtigen Speicher mit Speicherbereichen A, B für eine Zuordnung von gelisteten Anwendungsfunktionen mit Limit-Daten zu einer vorbestimmten Chipkarte und mit einem Speicherbereich C für Parameter verbunden ist. Der Mikroprozessor 85, 91 ist programmiert, einerseits um Daten nachzuladen, wobei für gültige Chipkarten 50, 49 eine durch eine Folgenummer bestimmte Reihenfolge für das Einstecken der Chipkarte 49 in die Chipkarten-Schreib/Leseeinheit verlangt wird, und andererseits zur Dateneingabe, welche dem autori-sierten Benutzer gestattet, für das Einstecken weiterer geeignet initialisierter Chipkarten 51, 52, 53 niedrigen Ranges eine bestimmten Reihenfolge festzulegen, um die Funktions- und Dateneingabe in die Frankiermaschine zu vereinfachen.

In einer Ausführungsvariante ist der Mikroprozessor 91 des Steuergerätes programmiert,

a) die in der jeweiligen Chipkarte 50, 51, 52, 53 gespeicherte Chipkartennummer zu laden,

b) die in der ersten Chipkarte 50 gespeicherten Limit-Daten zugehörig zu einer Funktion zu laden, wobei die Limit-Daten zu einer Funktion gehören, welche von einer weiteren Chipkarte aufgerufen werden kann,

c) die Zuordnung von Limit-Daten zugehörig zu einer Funktion in den vorgenannten Speicherbereichen A, B zugeordnet zu weiteren Chipkartennummer zu speichern, wobei in den vorgenannten Speicherbereichen A, B die Zuordnung beliebig wählbar vom autorisierten Benutzer zur Chipkartennummer speicherbar ist, für den nachfolgenden Aufruf durch weitere Chipkarten mittels ihrer Nummer,

d) eine Zuordnung der gelisteten Anwendungsfunktionen mit Limit-Daten zur jeweiligen Chipkartennummer in einem der Speicherbereiche A, B des nichtflüchtigen Speichers 94, 95 der Frankiermaschine aufzurufen und die entsprechenden im Programmspeicher 92 gespeicherten Anwendungsprogramme durchzuführen.

Es ist weiterhin vorgesehen, daß der Mikroprozessor 91 des Steuergerätes 90 programmiert ist, die in der ersten Chipkarte 50 gespeicherten Limit-Daten in einen Speicherbereiche C des nichtflüchtigen Speichers 94, 95 der Frankiermaschine als Parameter zu laden.

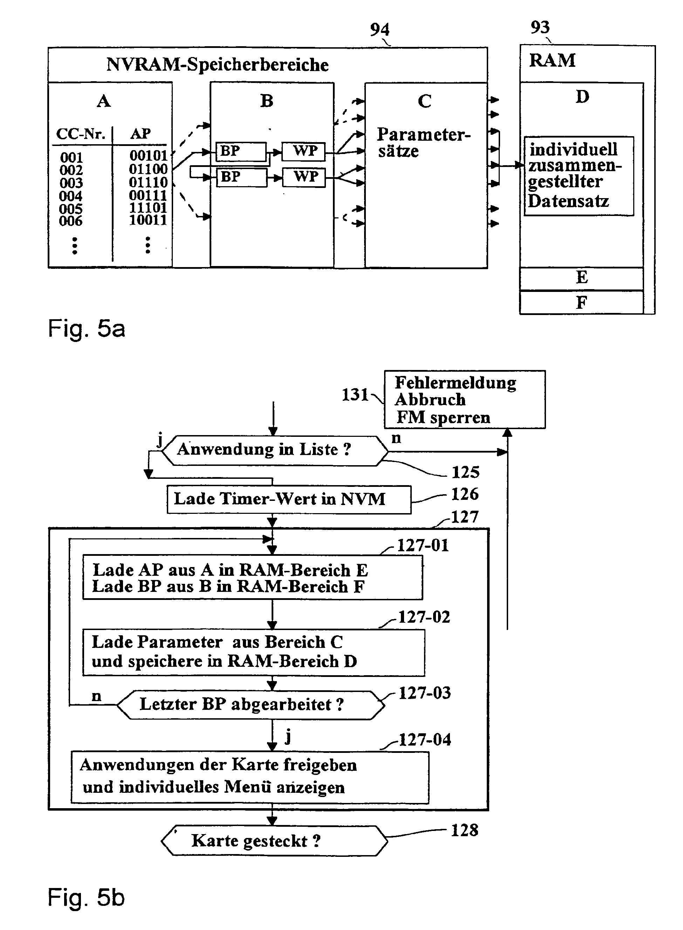

Die Figur 5a zeigt eine Aufteilung der Struktur auf Speicherbereiche A, B und C, wobei im ersten Speicherbereich A ein Verzeichnis gültiger Kartennummern, im zweiten Speicherbereich B Verknüpfungsbedingungen und im dritten Speicherbereich C zugehörige Parametersätze nichtflüchtig gespeichert vorliegen. Die vorgenannte Struktur kann in jedem der vorgenannten Speicherbereiche A und B separat modifiziert werden. Beispielsweise wird der Auflistung im Verzeichnis der gültigen Kartennummern CC-Nr. eine weitere Kartennummer neu hinzugefügt. Jeder Kartennummer ist ein Adreß-Pointer AP zugeordnet, welcher auf eine Adresse im zweiten Speicherbereich B zeigt, unter welcher die kartennummerabhängigen Verknüpfungsbedingungen zusammen mit zugehörigen Bedingungspointem BP und Wertpointern WP gespeichert sind. Die Wertpointer WP zeigen auf eine Adresse für den zugehörigen Parametersatz im dritten Speicherbereich C. Über die Bedingungspointer BP, welche auf eine Adresse für einen weiteren Bedingungspointer mit dem zugehörigen Wertpointer zeigen, wird eine Verknüpfung frei wählbar. Der Wertpointer WP zeigt dann auf eine Adresse mit dem zugehörigen Parametersatz im dritten Speicherbereich C.

Die aufgeteilte modifizierbare Struktur ist über die Pointer wieder herstellbar, wobei in Speicherbereichen E, F des Hauptarbeitsspeichers RAM 93 eine Zwischenspeicherung der geladenen Pointer erfolgt, wobei eine entsprechende Dateneingabe in einen Speicherbereich D des Hauptarbeitsspeichers RAM 93 zur Speicherung eines Datensatzes vorgenommen wird, wobei der Mikroprozessor 91 der Frankiermaschine eine entsprechende Funktion bzw. eine gespeicherte Reihenfolge von Funktionen entsprechend dem Anwendungsprogramm und der so eingegebenen Parameter ausführt. Eine der Funktionen kann zur Initialisierung von Folge-Karten ausgeführt werden, um diese modifizieren zu können oder um die Struktur in einer Tabelle mindestens teilweise anzuzeigen.

Es wird nach Figur 4a vorausgesetzt, daß ein Teil III des Kennungsstrings, ausgewertet wird und dann im Schritt 125 festgestellt wird, daß die Funktionenanwendung gelistet ist, indem die Kartennummer im Speicherbereich A aufgefunden wird. Nun wird ein Timer-Wert in einen weiteren - in Fig. 5a nicht dargestellten - Speicherbereich U eines nichtflüchtigen Speichers, vorzugsweise des Uhren/Datumsbausteins 95, geladen. Dann wird der Schritt 127 erreicht.

In der Figur 5b ist ein Detail des Ablaufplans nach Figur 4 dargestellt, um die Steuerung durch den Mikroprozessor 91 beim Aufruf mindestens einer der Funktionen entsprechend der gespeicherten Struktur durch Eingabe einer Chipkartennummer zu verdeutlichen. Bevor für eine Folgekarte die Funktionalität freigegeben wird, werden in einem Subschritt 127-01 derjenige Adreßpointer AP in einen Speicherbereich E des Hauptarbeitsspeichers RAM 93 geladen, welcher im Speicherbereich A der Chipkartennummer zugeordnet ist. Außerdem werden im Subschritt 127-01 Bedingungspointer BP Schritt für Schritt bei jedem Durchlaufen einer Schleife S in einen Speicherbereich F des Hauptarbeitsspeichers RAM 93 geladen. Diese vorgenannten Speicherbereiche E und F des Hauptarbeitsspeichers RAM 93 dienen zur Zwischenspeicherung der Daten der Pointer AP und BP für die nachfolgende Datenverarbeitung. Nach dem Laden und Zwischenspeichern der Daten der Pointer AP und BP wird ein im zweiten Speicherbereich B gespeicherter Wertpointer WP aufgefunden, welcher dem Bedingungspointer BP zugeordnet ist. Zugleich wird den Daten des Bedingungspointers BP ein Verweis auf einen nachfolgenden Bedingungspointer BP entnommen, auf welchen der Mikroprozessor 91 zugreifen soll, um weitere zugehörige Wertpointer WP aufzufinden. Die weitere Datenverarbeitung im Subschritt 127-02 ist vorzugsweise verschachtelt, d.h. zeitoptimal organisiert. So kann ein sogenanntes " pipelineing" durchgeführt werden, wenn die Wertpointer WP auf die Parametersätze im dritten Speicherbereich C zeigen und entsprechende Parametersätze aus dem dritten Speicherbereich C zur Speicherung im RAM-Bereich D des Hauptarbeitsspeichers RAM 93 geladen werden. Im nachfolgenden Subschritt 127-03 wird dabei geprüft, ob bei der vorgenannten Abarbeitung der Routine ein letzter Bedingungspointer BP abgearbeitet worden ist. Ist das nicht der Fall, dann wird zum Subschritt 127-01 zurückverzweigt, um sequentiell die Schleife S weiter solange abzuarbeiten, bis im Subschritt 127-03 das Abarbeiten eines letzten Bedingungspointers BP festgestellt worden ist. Im nachfolgenden Subschritt 127-04 werden die Anwendungen der gesteckten Karte freigegeben, entsprechend des während der Abarbeitung der o.g. Schleife S individuell zusammengestellten Datensatzes im Speicherbereich D. Der Mikroprozessor 91 greift dabei auf im Programmspeicher 92 gespeicherte Funktionenanwendungen zurück und auf die Parameter, welche im o.g. zwischengespeicherten Datensatz vorliegen. Zugleich kann ein dem individuellen Datensatz entsprechendes individuelles Menü in der Anzeigeeinheit 89 dargestellt werden.

Es ist vorgesehen, daß eine im Programmspeicher 92 gespeicherte Funktionenanwendung eine Tastatureingabe vorsieht, damit der Mikroprozessor 91 das Anwendungsprogramm zu Ende abarbeiten kann.

Es ist vorgesehen, daß der Mikroprozessor 91 programmiert ist, auf drei Speicherbereiche A, B, C des nichtflüchtigen Speichers 94, 95 des Steuergerätes 90 zuzugreifen, um eine Zuordnung der gelisteten Anwendungsfunktionen zur jeweiligen Chipkartennummer im nichtflüchtigen Speicher 94, 95 der Frankiermaschine aufzurufen und die entsprechenden Anwendungsprogramme durchzuführen. Die Zuordnung repräsentiert eine vorbestimmte Struktur, wobei die auf die drei Speicherbereiche A, B, C des nichtflüchtigen Speichers 94, 95 aufgeteilte modifizierbare Struktur mittels Pointer wieder herstellbar ist. Die Zuordnung der gelisteten Anwendungsfunktionen zur jeweiligen Chipkartennummer in einem der Speicherbereiche A, B des nichtflüchtigen Speichers 94, 95 der Frankiermaschine, welche vom Mikroprozessor 91 aufgerufen wird, um die entsprechenden im Programmspeicher 92 gespeicherten Anwendungsprogramme durchzuführen, ist mit einer eingesteckten Masterkarte beliebig änderbar, weil in den vorgenannten Speicherbereichen A, B die Zuordnung beliebig wählbar vom autorisierten Benutzer nach mindestens einer entsprechenden Eingabe, beispielsweise per Tastatur 88, speicherbar ist.

Es ist weiterhin vorgesehen, daß die im nichtflüchtigen Speicher 94, 95 der Frankiermaschine nichtflüchtig gespeichert vorliegende Struktur, eine durch die Reihenfolge der Auflistung der Chipkartennummmern und durch die Zuordnung von gelisteten Anwendungsfunktionen gegebene hierarchische Struktur ist.

Der Mikroprozessors 91 des Steuergerätes 90 ist programmiert, die Chipkartennummer, die in einem dafür vorgesehenen Teil eines in den geschützten Speicherbereichen der Chipkarten 50, 51, 52, 53 gespeicherten Kennungsstrings gespeichert vorliegt, zu laden, eine Funktionseingabe nach dem Stecken der Chipkarte entsprechend durchzuführen, um die Verwaltung von zu buchenden Kostenstellendaten durch Zugriff auf die zugehörige Funktionenanwendung zu vereinfachen.

Die am Beispiel des Schrittes 127 erläuterte Programmierbarkeit der Anwendungen, die einer Chipkartennummer zugeordnet sind, gilt für erste Chipkarten (Masterkarten) im Schritt 121 ebenso wie für zweite und weitere Folgekarten.

Für Masterkarten 50 kann bei Abarbeitung eines entsprechenden Schrittes 121-04 auf ein Schirmbild für einen Menüpunkt: Erzeugung einer Anwendungskarte (nicht dargestellter Schritt 121-1) verzweigt werden.

Eine Gruppenkarte GC ist eine solche zweite Karte, welche jeweils höher autorisiert ist, als eine weitere Chipkarte EC oder Folgekarte FC (Fig.1b). Diese letzteren Karten EC und FC bilden Gruppenmitglieder auf unterschiedlichen Hierarchieebenen 52 und 53. Die Befugnis-Sicherung innerhalb einer Gruppen-Anwendung, d.h. Anwendungen in einer Hierarchieebene 52 oder 53, kann vorteilhaft auch sehr unterschiedlichen Ansprüchen an die individuelle Sicherheit der Gruppenmitglieder angepaßt werden. Das wird dadurch erreicht, daß für jede eindeutig durch den hierarchisch strukturierten Kennungsstring vom Mikroprozessor identifizierbare Chipkarte EC oder FC ein Limit-Konto in der Frankiermaschine geführt wird. Die hierarchisch naheste höher stehende Gruppenkarte GC lädt davor beim Initialisieren der hierarchisch tiefer stehenden Chipkarte EC oder FC das Limit-Konto in geschützte Speicherbereiche des nichtflüchtigen Speichers 94, 95. Das Limit-Konto ist beispielsweise ein Zeitkonto, welches die folgenden Kenngrößen beinhaltet:

- mehrmalige Benutzung innerhalb eines Zeitbereiches Z1,
- maximal erlaubter Nutzungsabstand beträgt Zeitdauer Z2,
- maximale Nutzungsdauer / session beträgt Zeitdauer Z3,
- maximale Lebensdauer / lifetime beträgt Zeitdauer Z4,
- die Anwendungsverlängerungszeit beträgt Zeitdauer Z5.

Durch derartige Parameter (Zeitkontendaten) können für jeden Chipkartentyp Befugnisse und Limitierungen bis hin zu einem Verfallsdatum erteilt werden, an welchem die Anwendung gesperrt wird. Diejenige Chipkarte, die Befugnisse und Limitierungen erteilt hat, kann allein die Erteilung sperren oder erneuern. Erfindungsgemäß kann durch die eine Befugnis/Limitierung erteilende ranghöhere Chipkarte (Gruppenkarte) die Befugnis für rangniedrigere Chipkarten EC oder FC individuell erneuert bzw. verlängert werden.

Es ist vorgesehen, daß der Mikroprozessor 91 der Frankiermaschine über den Mikroprozessor 75 der Chipkarten-Schreib/Leseeinheit 70 einen Datensatz an die erste Chipkarte 50 sendet, um das Laden der zu einer Funktion zugehörigen Limit-Daten zu veranlassen, sowie daß mindestens die erste Chipkarte 50 eine Prozessor-Chipkarte ist, mit einem Nurlesespeicher ROM für einen allgemeinen Speicherbereich, mit einem nichtflüchtigen Schreib/Lese-Speicher EEPROM, welcher einen ungeschützten CC1 und geschützten Speicherbereich CC2 aufweist, mit einer speziellen Sicherheits- und Schutzlogik. Es wird erst eine PIN-Prüfung durchführt, bevor auf sicherheitsrelevante Daten im geschützten Speicherbereich CC2 zugegriffen wird, wobei im geschützten Speicherbereich CC2 der ersten Chipkarte 50 zusammen mit dem einem Teil der Chipkartennummer sicherheitsrelevante Daten gespeichert sind, welche zeitliche, stückzahl- oder wertgrößenmäßige Grenzdaten darstellen oder Funktionen beinhalten, welche eine Limitierung einer Operation bewirken und wobei die in der ersten Chipkarte 50 gespeicherten Limit-Daten zugehörig zu einer Funktion gespeichert sind.

**Patentansprüche**

1. Verfahren zum Datenaustausch zwischen einer Frankiermaschine und Chipkarten, wobei die Frankiermaschine mit einer Chipkarten-Schreib/Leseeinheit (70) für Chipkarten unterschiedlichen Typs und mit einer Steuereinrichtung (1) zum Steuern des Datenladens und der Dateneingabe per Chipkarte ausgerüstet ist,

   - mit Steuerung des Datenaustausches mittels Datensätzen anhand des für jeden Chipkartentyp spezifischen Protokolls,
   - mit Laden eines Datensatzes, der die Chipkartennummer einschließt, und mindestens eines zusätzlichen Datensatzes, wobei Daten aus den speziell gesicherten nichtflüchtigen Speicherbereichen einer ersten Chipkarte (50) in die nichtflüchtigen Speicherbereiche der Steuereinrichtung (1) der Frankiermaschine geladen werden,
   - mit Überprüfung einer herstellerbestimmten Reihenfolge für das Einstecken von gültigen ersten und zweiten Chipkarten (50, 49) und einer benutzerbestimmten Reihenfolge für das Einstecken von gültigen weiteren Chipkarten (51, 52, 53) durch die Steuereinrichtung (1).

2. Verfahren, nach Anspruch 1, **dadurch gekennzeichnet, daß** der zusätzliche Datensatz eine in den speziell gesicherten nichtflüchtigen Speicherbereichen der Chipkarte gespeicherte Basisnummer (BN) und Folgenummer (FN) einschließt, daß diese in die Frankiermaschine geladene Basisnummer (BN) mit einem dort gespeicherten ersten Code verglichen wird, um eine Zuordnung von in der Frankiermaschine gespeicherten Merkmalen/Daten zu einem zweiten Code zu ändern, der nachfolgend eingegeben wird.

3. Verfahren, nach den Ansprüchen 1 und 2, **dadurch gekennzeichnet, daß** das Laden der vorgenannten Datensätze aus den Speicherbereichen einer ersten Chipkarte (50) in die nichtflüchtigen Speicherbereiche der Steuereinrichtung (1) der Frankiermaschine einen Berechtigten ausweist, daß der zweite Code von dem Berechtigten per Tastatur in die Frankiermaschine eingegeben wird, daß in den nichtflüchtigen Speicherbereiche eine Liste erstellt wird, wobei dem zweiten Code in einer Liste Anwendungsfunktionen zugeordnet sind.

4. Verfahren, nach den Ansprüchen 1 und 2, **dadurch gekennzeichnet, daß** das Laden der vorgenannten Datensätze aus den Speicherbereichen einer ersten Chipkarte (50) in die nichtflüchtigen Speicherbereiche der Steuereinrichtung (1) der Frankiermaschine einen Berechtigten ausweist, daß der zweite Code von dem Berechtigten per zweite Chipkarte (49) in die Frankiermaschine eingegeben wird, daß in den nichtflüchtigen Speicherbereiche eine Liste erstellt wird, wobei dem zweiten Code in einer Liste Anwendungsfunktionen zugeordnet sind.

5. Verfahren, nach Anspruch 1, **dadurch gekennzeichnet, daß** die zweite Chipkarte eine weitere Nachladechipkarte (49) ist, wobei weitere Daten geladen werden, wenn die durch die vorgenannte erste Chipkarte (50) in die Frankiermaschine geladene und dort gespeicherte Folgenummer (FN) eine vorbestimmte Beziehung zu einer nachfolgend in die Frankiermaschine geladenen Basisnummer (BN) der weiteren Nachladechipkarte (49) hat.

6. Verfahren, nach Anspruch 1, **dadurch gekennzeichnet, daß** im geschützten Speicherbereich (CC2) der ersten Chipkarte (50) zusammen mit dem einem Teil der Chipkartennummer sicherheitsrelevante Daten gespeichert vorliegen, welche die Nachfolgekarte definieren, welche zeitliche, stückzahl- oder wertgrößenmäßige Grenzdaten darstellen oder Funktionen beinhalten, welche eine Limitierung einer Operation bewirken.

7. Verfahren, nach Anspruch 1, **dadurch gekennzeichnet, daß** in der Frankiermaschine die Richtigkeit der Reihenfolge vom Mikroprozessor geprüft wird, indem die aus der vorherigen Chipkarte geladene Folgenummer $FN_n$ in eine Folgenummer $FN_{n+1}$ umgewandelt und nichtflüchtig gespeichert wird, um diese dann mit einer aktuell geladenen Folgenummer $FN_{n+1}$ zu vergleichen.

8. Verfahren, nach Anspruch 1, **dadurch gekennzeichnet, daß** die Frankiermaschine ihre Seriennummer SN zur Chipkarte übermittelt und daß ein Vergleich der übermittelten Seriennummer SN mit einer gespeicherten Seriennummer in der Chipkarte erfolgt und das Vergleichsergebnis zur Chipkarten-Schreib/Leseeinheit übermittelt wird, welche bei positiven Vergleichsergebnis einen Datensatz D12 mit Nummern, Vorgabedaten und Nachladedaten sowie einen zugehörigen Authorisierungscode MAC empfängt und daß die Steuerung der Frankiermaschine eine Authorisierung der geladenen Daten anhand des übermittelten Authorisierungscodes MAC durchführt.

9. Anordnung zum Datenaustausch zwischen einer Frankiermaschine und Chipkarten, wobei die Frankiermaschine mit einer Chipkarten-Schreib/Leseeinheit (70) und zugehörigen Steuereinrichtung (1) ausgestattet ist, **gekennzeichnet dadurch,**

   - **daß** ein Mikroprozessor (85, 91) der Steuereinrichtung (1) mit der Chipkarten-Schreib/Leseeinheit (70) und mit einem nichtflüchtigen Speicher (94, 95) verbunden ist, wobei letzterer mit Speicherbereichen (A, B) für eine Zuordnung von gelisteten Anwendungsfunktionen zu einer vorbestimmten Chipkarten-Nummer und mit einem Speicherbereich (C) für Parameterdaten mit zugehörigen Limit-Daten ausgestattet ist, um eine modifizierbare Struktur zu speichern,
   - **daß** der Mikroprozessor (85, 91) zur Datennachladung und zur Dateneingabe durch Chipkarten programmiert ist, wobei zur Datennachladung für gültige Chipkarten (50, 49) vom Mikroprozessor eine bestimmte Reihenfolge für das Einstecken von gültigen ersten und zweiten Chipkarten (50, 49) überprüft wird und wobei die Dateneingabe dem autorisierten Benutzer gestattet, für das Einstecken weiterer geeignet initialisierter Chipkarten (51, 52, 53) niedrigen Ranges eine bestimmten Reihenfolge festzulegen, um die Funktions- und Dateneingabe in die Frankiermaschine zu vereinfachen.

10. Anordnung, nach Anspruch 9, **gekennzeichnet dadurch, daß** vom Mikroprozessor zur Datennachladung für gültige Chipkarten (50, 49) eine durch eine Folgenummer bestimmte Reihenfolge für das Einstecken der Chipkarte (49) in die Chipkarten-Schreib/Leseeinheit verlangt wird,

11. Anordnung, nach Anspruch 9, **gekennzeichnet dadurch, daß** die im nichtflüchtigen Speicher (94, 95) der Frankiermaschine nichtflüchtig gespeichert vorliegende modifizierbare Struktur, eine durch die Reihenfolge der Auflistung der Chipkartennummern und durch die Zuordnung von gelisteten Anwendungsfunktionen mit Limit-Daten gegebene hierarchische Struktur ist.

**12.** Anordnung, nach einem der vorgenannten Ansprüche 8 und 11, **gekennzeichnet dadurch, daß** der Mikroprozessor (85, 91) programmiert ist, eine Veränderung in der vorgenannten modifizierbare Struktur derart vorzunehmen, daß durch die eine Befugnis/Limitierung erteilende ranghöhere Chipkarte, die Befugnis für rangniedrigere Chipkarten individuell erneuert bzw. verlängert wird.

**13.** Anordnung, nach Anspruch 9, **gekennzeichnet dadurch, daß** der Mikroprozessor (85, 91) zur Datennachladung durch Chipkarten programmiert ist, wobei die Nachladung eines mit einem ersten geheimen Schlüssel K1 verschlüsselten Sitzungsschlüssels K1[$KEY_{n+1}$] einschließt, und daß der Mikroprozessor (85, 91) dazu programmiert ist, daß im nichtflüchtigen Speicher (94, 95) der Frankiermaschine ein Sitzungsschlüssel $KEY_{n+1}$ in einer mit einem geheimen Basisschlüssel Kb verschlüsselten Form Kb[$KEY_{n+1}$] speicherbar ist.

**14.** Anordnung, nach Anspruch 13, **gekennzeichnet dadurch, daß** der Mikroprozessor (85, 91) zur Datennachladung des verschlüsselten Sitzungsschlüssels K1 [$KEY_{n+1}$], zur Entschlüsselung mit dem ersten geheimen Schlüssel K1 des verschlüsselten Sitzungsschlüssels K1[$KEY_{n+1}$] zum Sitzungsschlüssel $KEY_{n+1}$ und zur Verschlüsselung mit dem geheimen Basisschlüssel Kb der Frankiermaschine sowie zur Speicherung des mit dem geheimen Basisschlüssel Kb verschlüsselten Sitzungsschlüssels in der Form Kb[$KEY_{n+1}$] programmiert ist.

**Claims**

**1.** A method for data exchange between a franking machine and chip cards, wherein the franking machine is equipped with a chip-card write/read unit (70) for chip cards of different types and with a control unit (1) for controlling the loading of data and the entry of data by chip card,

- with control of the data exchange by means of data records on the basis of the specific protocol for every type of chip card;
- with loading of a data record including the chip-card number and of at least one additional data record, data being loaded from the specifically protected non-volatile memory areas of a first chip card (50) into the non-volatile memory areas of the control unit (1) of the franking machine;
- with verification of a manufacturer-defined sequence for the insertion of valid first and second chip cards (50, 49) and a user-defined sequence for the insertion of further valid chip cards (51, 52, 53) by the control unit (1).

**2.** A method according to Claim 1, **characterized in that** the additional data record includes a basis number (BN) and follow-up number (FN) stored in the specifically protected non-volatile memory areas of the chip card and that said basis number (BN) loaded into the franking machine is compared with a first code stored there in order to change the assignment of characteristics/data stored in the franking machine to a second code that is entered subsequently.

**3.** A method according to Claims 1 and 2, **characterized in that** the loading of said data records from the memory areas of a first chip card (50) into the non-volatile memory areas of the control unit (1) of the franking machine identifies an authorized person; that the second code is entered into the franking machine by the authorized person by means of the keyboard; and that a list is created in the non-volatile memory areas, wherein application functions are assigned to the second code in a list.

**4.** A method according to Claims 1 and 2, **characterized in that** that the loading of said data records from the memory areas of a first chip card (50) into the non-volatile memory areas of the control unit (1) of the franking machine identifies an authorized person; that the second code is entered into the franking machine by the authorized person by means of a second chip card (49); and that a list is created in the non-volatile memory areas, wherein application functions are assigned to the second code in a list.

**5.** A method according to Claim 1, **characterized in that** the second chip card is a further reload chip card (49), further data being loaded when the follow-up number (FN) loaded by said first chip card (50) into the franking machine and stored there has a pre-defined relation to a basis number (BN) of the further reload chip card (49) subsequently loaded into the franking machine.

**6.** A method according to Claim 1, **characterized in that**, in the protected memory area (CC2) of the first chip card (50), there are stored, together with a part of the chip card number, security-relevant data defining the follow-up card that represent time-, piece-number- or value-amount-related limit data or include functions that cause a limitation of an operation.

7. A method according to Claim 1, **characterized in that**, in the franking machine, the microprocessor verifies the correctness of the sequence by converting the follow-up number $FN_n$ loaded from the preceding chip card into a follow-up number $FN_{n+1}$ and storing it in a non-volatile manner in order to compare the latter with a follow-up number $FN_{n+1}$ that is currently loaded then.

8. A method according to Claim 1, **characterized in that** the franking machine transmits its serial number SN to the chip card; that the transmitted serial number SN is compared with a serial number stored in the chip card; that the result of the comparison is transmitted to the chip-card write/read unit that, in case of a positive result of the comparison, receives a data record D12 with numbers, default data and reload data as well as a related authorization code MAC; and that the control unit of the franking machine authorized the loaded data on the basis of the transmitted authorization code MAC.

9. An arrangement for data exchange between a franking machine and chip cards, wherein the franking machine is equipped with a chip-card write/read unit (70) and a related control unit (1), **characterized in,**

   - **that** a microprocessor (85, 91) of the control unit (1) is connected with the chip-card read-write unit (70) and with a non-volatile memory (94, 95), the latter being equipped with memory areas (A, B) for an assignment of enlisted application functions to a pre-defined chip-card number and with a memory area (C) for parameter data with related limit data for the purpose of storing a modifiable structure;
   - **that** the microprocessor (85, 91) is programmed for data reloading and data entry by chip cards, wherein, for valid chip cards (50, 49) for data reload, the microprocessor verifies a certain sequence for the insertion of valid first and second chip cards (50, 49) and wherein the data entry allows the authorized user to define a certain sequence for the insertion of further appropriately initialized chip cards (51, 52, 53) of a lower rank in order to simplify the entry of data into the franking machine.

10. An arrangement according to Claim 9, **characterized in that** the microprocessor demands, for valid chip cards (50, 49) for data reload, a certain sequence for the insertion of the chip card (49) into the chip-card write/read unit that is defined by a follow-up number.

11. An arrangement according to Claim 9, **characterized in that** the existing modifiable structure stored in the non-volatile memory (94, 95) of the franking machine is a hierarchical structure given by the order of listing of chip-card numbers and by the assignment of enlisted application functions with limit data.

12. An arrangement according to any of the preceding Claims 8 and 11, **characterized in that** the microprocessor (85, 91) is programmed for altering said modifiable structure in such a manner that the authorization for lower-ranking chip cards is individually renewed or extended by means of a higher-ranking chip card conferring an authorization/limitation.

13. An arrangement according to Claim 9, **characterized in that** the microprocessor (85, 91) is programmed for data reload by chip cards, wherein the reloading includes a session key $K1[KEY_{n+1}]$ encoded with a first secret key K1; and that the microprocessor (85, 91) is programmed in such a manner that a session key $KEY_{n+1}$ can be stored in the non-volatile memory (94, 95) of the franking machine in a form $Kb[KEY_{n+1}]$ encoded with a secret basis key Kb.

14. An arrangement according to Claim 13, **characterized in that** the microprocessor (85, 91) is programmed for data reload of the encoded session key $K1[KEY_{n+1}]$, for decoding the encoded session key $K1[KEY_{n+1}]$ with the first secret key K1 into session key $KEY_{n+1}$, and for encoding with the secret basis key Kb of the franking machine as well as for storing the session key encoded with the secret basis key Kb in the form $Kb[KEY_{n+1}]$.

## Revendications

1. Procédé destiné à l'échange de données entre une machine à affranchir et des cartes à puce, la machine à affranchir étant équipée d'une unité d'écriture/de lecture de carte à puce (70) pour des cartes à puce de différents types et d'un dispositif de commande (1) destiné à commander le chargement de données et l'entrée de données via carte à puce,

   - avec commande de l'échange de données grâce à des ensembles de données au moyen du protocole spécifique à chaque type de carte à puce,

- avec chargement d'un ensemble de données, qui inclut le numéro de carte à puce, et d'au moins un ensemble de données supplémentaire, des données étant chargées depuis les espaces mémoire non volatils spécialement sécurisés d'une première carte à puce (50) dans les espaces mémoire non volatils du dispositif de commande (1) de la machine à affranchir,
- avec vérification d'une séquence définie par le fabricant pour l'insertion de premières et deuxièmes cartes à puce (50, 49) valides et d'une séquence définie par l'utilisateur pour l'insertion de nouvelles cartes à puce (51, 52, 53) valides grâce au dispositif de commande (1).

2. Procédé selon la revendication 1, **caractérisé en ce que** l'ensemble de données supplémentaire inclut un numéro de base (BN) et un numéro de séquence (FN) enregistrés dans les espaces mémoire de la carte à puce non volatils spécialement sécurisés et **en ce que** ledit numéro de base (BN) chargé dans la machine à affranchir est comparé avec un premier code enregistré à cet emplacement afin de modifier une affectation des caractéristiques/données enregistrées dans la machine à affranchir à un second code, qui est entré par la suite.

3. Procédé selon l'une quelconque des revendications 1 et 2, **caractérisé en ce que** le chargement des ensembles de données susmentionnés depuis les espaces mémoire d'une première carte à puce (50) dans les espaces mémoire non volatils du dispositif de commande (1) de la machine à affranchir identifie un utilisateur autorisé, **en ce que** le deuxième code est entré par l'utilisateur autorisé dans la machine à affranchir via un clavier et **en ce qu'**une liste est générée dans les espaces mémoire non volatils, des fonctions d'application étant affectées au deuxième code dans une liste.

4. Procédé selon l'une quelconque des revendications 1 et 2, **caractérisé en ce que** le chargement des ensembles de données susmentionnés depuis les espaces mémoire d'une première carte à puce (50) dans les espaces mémoire non volatils du dispositif de commande (1) de la machine à affranchir identifie un utilisateur autorisé, **en ce que** le deuxième code est entré par l'utilisateur autorisé dans la machine à affranchir via une deuxième carte à puce (49) et **en ce qu'**une liste est générée dans les espaces mémoire non volatils, des fonctions d'application étant affectées au deuxième code dans une liste.

5. Procédé selon la revendication 1, **caractérisé en ce que** la deuxième carte à puce est une nouvelle carte à puce de rechargement (49), de nouvelles données étant chargées si le numéro de séquence (FN) chargé dans la machine à affranchir grâce à la première carte à puce (50) susmentionnée et enregistré à cet emplacement a un rapport prédéfini avec un numéro de base (BN) de la nouvelle carte à puce de rechargement (49) chargé par la suite dans la machine à affranchir.

6. Procédé selon la revendication 1, **caractérisé en ce que** des données relevant de la sécurité sont disponibles, enregistrées dans l'espace mémoire protégé (CC2) de la première carte à puce (50) conjointement avec la première partie du numéro de carte à puce, lesdites données relevant de la sécurité définissant la carte subséquente, lesquelles représentent des limites quant au temps, au nombre de pièces ou aux valeurs ou comportent des fonctions qui causent la limitation d'une opération.

7. Procédé selon la revendication 1, **caractérisé en ce que** l'exactitude de la séquence est vérifiée par le microprocesseur dans la machine à affranchir, en convertissant le numéro de séquence $FN_n$ chargé depuis l'ancienne carte à puce en un numéro de séquence $FN_{n+1}$ et en l'enregistrant de manière non volatile afin de comparer ensuite celui-ci avec un numéro de séquence $FN_{n+1}$ chargé présentement.

8. Procédé selon la revendication 1, **caractérisé en ce que** la machine à affranchir transmet son numéro de série SN à la carte à puce et **en ce qu'**une comparaison du numéro de série SN transmis avec un numéro de série enregistré est effectuée dans la carte à puce et le résultat de la comparaison est transmis à l'unité d'écriture/de lecture de carte à puce, laquelle reçoit, en cas de résultat positif de la comparaison, un ensemble de données D12 avec numéros, données prédéfinies et données de rechargement, ainsi qu'un code d'autorisation MAC correspondant et **en ce que** la commande de la machine à affranchir effectue une autorisation des données chargées au moyen du code d'autorisation MAC transmis.

9. Agencement destiné à l'échange de données entre une machine à affranchir et des cartes à puce, la machine à affranchir étant équipée d'une unité d'écriture/de lecture de carte à puce (70) et d'un dispositif de commande (1) correspondant, **caractérisé**

- **en ce qu'**un microprocesseur (85, 91) du dispositif de commande (1) est relié à l'unité d'écriture/de lecture de carte à puce (70) et à une mémoire non volatile (94, 95), cette dernière étant pourvue d'espaces mémoire (A, B) pour une affectation de fonctions d'application listées à un numéro de carte à puce prédéfini et d'un espace mémoire (C) pour des données paramétriques avec des données limites correspondantes afin d'enregistrer une structure modifiable,

- **en ce que** le microprocesseur (85, 91) est programmé en vue du rechargement de données et en vue de l'entrée des données grâce aux cartes à puce, une séquence définie pour l'insertion de premières et deuxièmes cartes à puce (50, 49) valides étant vérifiée en vue du rechargement de données pour des cartes à puce (50, 49) valides par le microprocesseur et l'entrée de données permet à l'utilisateur autorisé d'établir une séquence définie pour l'insertion de nouvelles cartes à puce (51, 52, 53) de rang inférieur initialisées de manière appropriée afin de simplifier l'entrée de fonction et de données dans la machine à affranchir.

10. Agencement selon la revendication 9, **caractérisé en ce qu'**une séquence déterminée par un numéro de séquence est requise par le microprocesseur pour l'insertion de la carte à puce (49) dans l'unité d'écriture/de lecture de carte à puce en vue du rechargement de données pour des cartes à puce (50, 49) valides.

11. Agencement selon la revendication 9, **caractérisé en ce que** la structure modifiable disponible, enregistrée de manière non volatile dans la mémoire non volatile (94, 95) de la machine à affranchir est une structure hiérarchique donnée grâce à la séquence du listage des numéros de carte à puce et grâce à l'affectation de fonctions d'application listées avec des données limite.

12. Agencement selon l'une quelconque des revendications précédentes 8 et 11, **caractérisé en ce que** le microprocesseur (85, 91) est programmé pour procéder à une modification dans la structure modifiable susmentionnée de telle manière que grâce à la carte à puce de rang plus élevé donnant une autorisation/limitation, l'autorisation pour des cartes à puce de rang inférieur est renouvelée ou prolongée individuellement.

13. Agencement selon la revendication 9, **caractérisé en ce que** le microprocesseur (85, 91) est programmé en vue du rechargement de données grâce aux cartes à puce, le rechargement incluant une clé de session $K1[KEY_{n+1}]$ codée avec une première clé confidentielle K1 et **en ce que** le microprocesseur (85, 91) est programmé afin qu'une clé de session $KEY_{n+1}$ soit enregistrable dans la mémoire non volatile (94, 95) de la machine à affranchir sous une forme $Kb[KEY_{n+1}]$ codée avec une clé de base confidentielle Kb.

14. Agencement selon la revendication 13, **caractérisé en ce que** le microprocesseur (85, 91) est programmé en vue du rechargement de données de la clé de session $K1 [KEY_{n+1}]$ codée, en vue du décodage avec la première clé confidentielle K1 de la clé de session $K1[KEY_{n+1}]$ codée en la clé de session $KEY_{n+1}$ et en vue du codage avec la clé de base confidentielle Kb de la machine à affranchir, ainsi qu'en vue de l'enregistrement de la clé de session codée avec la clé de base confidentielle Kb sous la forme $Kb[KEY_{n+1}]$.

50

| | RAM | EEPROM |
|---|---|---|
| I/O-interface & Security & fuse logic | | 32767 |
| | CPU & ALU & Timer | CC1 |
| | | 513 |
| | | 512 |
| | ROM | CC2 |
| | | 0 |

MC

## Fig. 1a

53   52   51   50

FC 2

EC 1

GC 1-4

MC
MASTER
CARD
(Typ c)

EC 4

FC 5

EC 5

GC 6-8

(Typ a)

FC 8

EC 8

FN   49

FC 9

(Typ a)

(Typ a)

UC
UPDATE
CARD
(Typ b)

## Fig. 1b

Fig. 2

Fig. 3

100

Ⓒ

Einschalten → 110 Fehlermeldung

101

j

Chipkarte gesteckt ? n

Senden laut Protokoll & auswerten 102

j

Chipkarte als Typ c lesbar ? n 103

104 Senden laut Protokoll & auswerten

131

Benutzung der FM sperren

105 Chipkarte als Typ b lesbar ? n

106 j 109 107

j Chipkarte als Typ n lesbar ? n 108

111

Kennungsstring, Teil I (0FH) in den NVM der FM laden & auswerten

112 Firmen-Kennzahl B speichern

113 Fehlermeldung

114

Kennungsstring, Teil II (10H-1FH) in den NVM der FM laden
Kennzahl A maskieren zu A1, bilde A2 = A1 - SN - C

115 j Kennzahl B = A2 ? n

116 Sperren des Speicherbereiches & Fehlermeldung

117 Kennzahl A maskieren

119 Kennungsstring, Teil III (20H-3BH) in
den NVM der FM laden und auswerten

j Masterkarte ? n 118

j Anwendung in Liste gefunden ? n

120 Lade Timer-Wert in NVM

Lade Timer-Wert in NVM 125

126

121 Funktionalität freigeben für
Master, incl. Erzeugung von
einer spez.Anwendungskarte

Funktionalität freigeben
für Anwendung, 127

j Karte gesteckt ? n 122

124

Karte gesteckt ? n 128

130

n 123

Timer starten Ⓒ

n Timerende ? j

129

Timer starten n

Ⓒ Timerende ? j

Fig. 4a

EP 0 930 586 B1

MASTER                                                          SLAVE

RESYNCHRONISATION

D1        | 31 | EF | 00 | DE |  →

Adressen-  CTRL-  Daten-  Check-        | 13 | EF | 00 | FC |      D2
Byte       Byte   längen- Byte
                  Byte

SELECT APPLICATION

D3  | 31 | 00 | 02 | F1 | 00 | C2 |  →

         1 Byte   2 Byte
         Datenl.  Dateninhalt   ←    | 13 | 20 | 01 | 81 | B3 |     D4

POWER ON                                          1 Byte   1 Byte
                                                  Datenl.  Returncode

D5  | 31 | 22 | 01 | 01 | 13 |  →

       1 Byte  1 Byte
       Datenl.                  ←                                    D6

                                         24 Byte

SELECT ICC-APPLICATION

D7  | 31 | 44 | 14 | 04 | 31 | 00 | 0F | 04 | 02 | F1 | 0B |
         Layer 1              Layer 2

    | 39 | 32 | 38 | 30 | 49 | 43 | 43 | 2D | 33 | 2F | 33 | 8A | 65 |  →
              11 Byte  Hersteller-Kennung

                                         ←                           D8
                                              21 Byte

READ TOKEN

D9  | 31 | 66 | 09 | 04 | 31 | 22 | 04 | 04 | 05 | 01 | 00 | 17 | 5A |  →
         Layer 1        Layer 2             Befehl

                                    ←                                D10
                                    Kennungsstring
                                              64 Byte

CHECK SN

D11  |    |    |    |    |    |    |    |  →
              COMPSN

     | 31 |    |    |    |    |    |    |    |    |    |    |             D12
          Layer 1              Layer 2

              |    |    |    |    |    |    |    |    |    |
                        Layer 3        Check-  Check-
                                       Byte    Byte

CHECK FN

D13  |    |    |    | F6 |    |    |  →
         Kennungsstring auslesen

                                    ←                                D14
                                       Layer

Fig. 4b

**Fig. 5a**

**Fig. 5b**